# EUROPEAN PATENT APPLICATION

(11) **EP 2 071 464 A2**
(43) Date of publication of application: **17.06.2009**
(21) Application number: 08251749.1
(22) Date of filing: 19.05.2008
(51) Int. Cl.: G06F 11/14

(54) **Storage system and data transfer method**

(30) Priority: 19.10.2007 JP 2007272897
(71) Applicant: Hitachi Ltd., Chiyoda-ku Tokyo 100-8280 (JP)
(72) Inventor: Iwami, Naoko c/o Hitachi Ltd. Intellectual Property Group, Tokyo 100-8220 (JP); Kumazawa, Kiyotake c/o Hitachi Ltd. Intellectual Property Group, Tokyo 100-8220 (JP); Yamamoto, Akira c/o Hitachi Ltd. Intellectual Property Group, Tokyo 100-8220 (JP); Iwasaki, Masaaki c/o Hitachi Ltd. Intellectual Property Group, Tokyo 100-8220 (JP); Kodama, Shoji c/o Hitachi Ltd. Intellectual Property Group, Tokyo 100-8220 (JP)
(74) Representative: Moore, Graeme Patrick

(57) **Abstract**

This storage system includes one or more household appliances (22A - 22F), a home server (20) storing contents data and management information of the contents data received from the one or more household appliances and pre-set with an unused capacity limit, and an online storage center (4). When the actual unused capacity in the home server falls below the capacity limit, the home server sends to and stores in the online storage center prescribed contents data and management information of the prescribed contents data among the contents data and management information of the contents data stored in the home server, and deletes the prescribed contents data from the home server while leaving the management information of the prescribed contents data stored in the home server.

## Description

This application relates to and claims priority from Japanese Patent Application No. 2007-272897, filed on October 19, 2007, the entire disclosure of which is incorporated herein by reference.

The present invention generally relates to a storage system and a data transfer method, and in particular can be applied to a storage system to be used for the backup of data in homes.

In homes, various types of domestic digital electrical appliances (hereinafter simply referred to as "household appliances") such as a digital recorder, a TV, and a PC (Personal Computer) are on the increase. When storing data created and recorded in a household appliance, such data in the household appliance is stored in a storage apparatus in a home server via a home network or a recording medium, but the actual condition is that the total data volume to be stored in the storage apparatus is also continuing to rise.

Patent Documents 1 and 2 disclose technology concerning data for use in household appliances.

For instance, Japanese Patent Laid-Open Publication No. 2005-31804 (Patent Document 1) discloses a system where an online storage 35 in a contents storage service site 32 for accumulating contents of a music server 22, a home server 23, a television 24 and the like in a home 20 uploaded by a user, a download site 33, and a billing and settlement service provider 37 that provides billing and settlement service in coordination with the download site 33 are connected via the Internet 31.

In addition, Japanese Patent Laid-Open Publication No. 2004-192602 (Patent Document 2) describes a method of automatically restoring lost data by using the data backed up in a portal server during a malfunction of the home server as a result of periodically transferring data, which was updated and accumulated in the home server that controls and manages a home network to which a plurality of household appliances are connected, to the portal server connected via the Internet for performing data backup.

Normally, since data for use in household appliances is accumulated in each household appliance, the user needs to manage data for each household appliance and perform appropriate backup of such data.

In addition, since there is a limit to the recording capacity of the respective household appliances, the user must personally manage the storage capacity of the respective household appliances by deleting or editing data so that the accumulated data will not exceed the recording capacity.

Further, when the user is to replace an old-model household appliance with a new-model household appliance, the user needs to transfer the data accumulated in the old-model household appliance to the new-model household appliance, and this can be a cumbersome task for the user.

Thus, an object of the present invention is to provide a storage system and a data transfer method that does not require a user to manually manage the respective data volumes in the home.

In order to preferably achieve the foregoing object, an aspect of the present invention provides a storage system comprising one or more household appliances; a home server connected to the one or more household appliances via a home network, storing contents data and management information of the contents data received from the one or more household appliances, and pre-set with an unused capacity limit; and an online storage center connected to the home server via a network. With this storage system, when the actual unused capacity in the home server falls below the capacity limit, the home server sends to and stores in the online storage center prescribed contents data and management information of the prescribed contents data among the contents data (data stored in household appliances, mobile devices, home servers, online storage centers or contents providers) and management information of the contents data stored in the home server, and deletes the prescribed contents data from the home server while leaving the management information of the prescribed contents data stored in the home server.

Consequently, the home server is able to store the backup data and backup management information of the contents data and management information of such contents data in the online storage center. Moreover, although data with an old access date in the home server will be deleted, management information of such contents data will remain. In addition, the unused capacity limit in the home server can be maintained at all times.

Another aspect of the present invention provides a storage system comprising one or more household appliances; a home server connected to the one or more household appliances via a home network, and storing contents data and management information of the contents data received from the one or more household appliances; and an online storage center connected to the home server via a network. With this storage system, the home server sends to and stores in the online storage center the contents data and the management information of the contents data stored in the home server, and deletes contents data among the contents data and the management information of the contents data stored in the home server at a timing that is independent from the sending of the contents data and the management information of the contents data to the online storage center.

Consequently, the home server is able to store the backup data and backup management information of the contents data and management information of such contents data in the online storage center. Moreover, although data with an old access date in the home server will be deleted, management information of such contents data will remain. In addition, the unused capacity limit in the home server can be maintained at all times.

Another aspect of the present invention provides a data transfer method of a storage system comprising one or more household appliances; a home server connected to the one or more household appliances via a home network, storing contents data and management information of the contents data received from the one or more household appliances, and pre-set with an unused capacity limit; and an online storage center connected to the home server via a network. This data transfer method comprises a step for sending the contents data and management data of the contents data stored in the home server from the home server to the online storage center when the actual unused capacity in the home server falls below the capacity limit, and a step for deleting the contents data from the home server while leaving the management information of the contents data stored among the contents data and the management information of the contents data sent from the online storage center.

Consequently, the home server is able to store the backup data and backup management information of the contents data and management information of such contents data in the online storage center. Moreover, although data with an old access date in the home server will be deleted, management information of such contents data will remain. In addition, the unused capacity limit in the home server can be maintained at all times.

According to aspects of the present invention, data of the respective household appliances can be backed up without the user having to manually manage the data volume of the respective household appliances or the storage capacity of the respective household appliances.

### DESCRIPTION OF DRAWINGS

Fig. 1 is a block diagram showing the overall configuration of a storage system according to an embodiment of the present invention;

Fig. 2 is a block diagram showing the contents of a memory in a home server according to an embodiment of the present invention;

Fig. 3 is a block diagram showing the contents of a memory in a household appliance according to an embodiment of the present invention;

Fig. 4 is a block diagram showing the contents of a memory in an online storage center according to an embodiment of the present invention;

Fig. 5 is a chart showing a server-side data management table according to an embodiment of the present invention;

Fig. 6 is a chart showing a server-side control table according to an embodiment of the present invention;

Fig. 7 is a chart showing a user management table according to an embodiment of the present invention;

Fig. 8 is a chart showing a center-side data management table according to an embodiment of the present invention;

Fig. 9 is a flowchart showing home server access processing 1 according to an embodiment of the present invention;

Fig. 10 is a flowchart showing home network access processing according to an embodiment of the present invention;

Fig. 11 is a flowchart showing data processing 1 according to an embodiment of the present invention;

Fig. 12 is a flowchart showing data processing 2 according to an embodiment of the present invention;

Fig. 13 is a flowchart showing data processing 2 according to an embodiment of the present invention;

Fig. 14 is a flowchart showing server-side data management processing 1 according to an embodiment of the present invention;

Fig. 15 is a flowchart showing server-side data management processing 1 according to an embodiment of the present invention;

Fig. 16 is a flowchart showing server-side data management processing 2 according to an embodiment of the present invention;

Fig. 17 is a flowchart showing server-side data management processing 2 according to an embodiment of the present invention;

Fig. 18 is a flowchart showing center-side data management processing according to an embodiment of the present invention;

Fig. 19 is a flowchart showing center-side data management processing according to an embodiment of the present invention;

Fig. 20 is a block diagram showing the contents of a memory in a home server according to an embodiment of the present invention;

Fig. 21 is a chart showing a mobile management table according to an embodiment of the present invention;

Fig. 22 is a block diagram showing the contents of a memory in a mobile device according to an embodiment of the present invention;

Fig. 23 is a chart showing a home contents processing management table according to an embodiment of the present invention;

Fig. 24 is a flowchart showing home contents processing according to an embodiment of the present invention;

Fig. 25 is a flowchart showing home contents processing according to an embodiment of the present invention;

Fig. 26 is a flowchart showing mobile processing according to an embodiment of the present invention;

Fig. 27 is a flowchart showing mobile processing according to an embodiment of the present invention;

Fig. 28 is a flowchart showing mobile data processing 1 according to an embodiment of the present invention;

Fig. 29 is a flowchart showing mobile data processing 2 according to an embodiment of the present invention;

Fig. 30 is a flowchart showing mobile data processing 2 according to an embodiment of the present invention;

Fig. 31 is a block diagram showing the contents of a memory in a household appliance of a different mode according to an embodiment of the present invention;

Fig. 32 is a chart showing a household appliance-side data management table according to an embodiment of the present invention;

Fig. 33 is a chart showing a control data management table according to an embodiment of the present invention;

Fig. 34 is a flowchart showing home server access processing 2 according to an embodiment of the present invention;

Fig. 35 is a flowchart showing home server access processing 2 according to an embodiment of the present invention; and

Fig. 36 is a flowchart showing household appliance data processing according to an embodiment of the present invention.

An embodiment of the present invention is now explained in detail with reference to the attached drawings.

(1) Configuration of Storage System

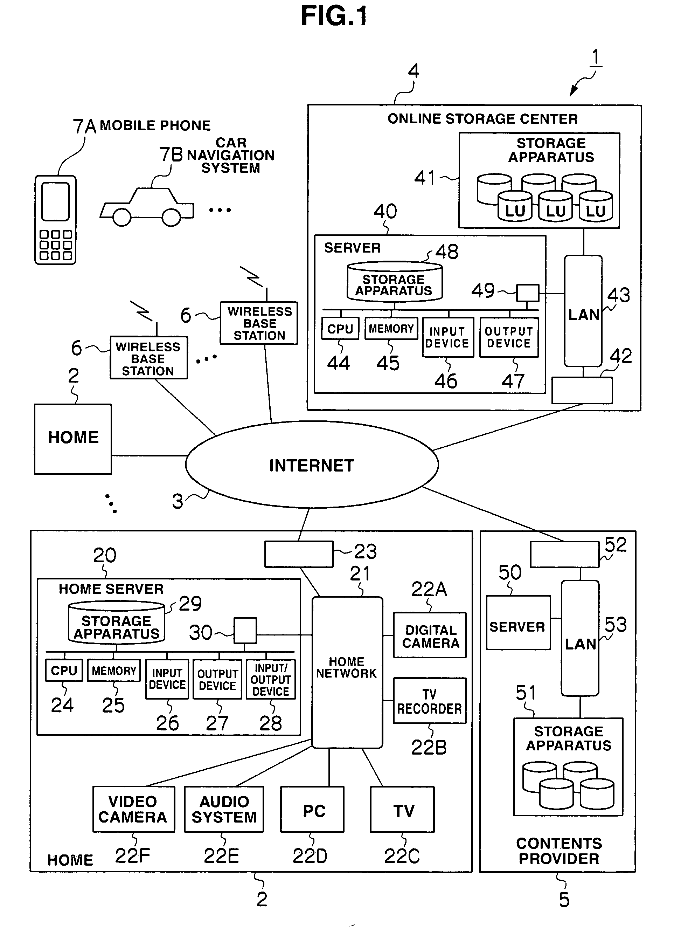

Fig. 1 shows the overall storage system 1 according to the present embodiment. The storage system 1 is configured by one or more domestic systems 2 being connected to an online storage center 4, a contents provider 5, a wireless base station 6 or another domestic system 2 via the Internet 3.

In the domestic system 2, a home server 20 is connected to various household appliances 22 such as a digital camera 22A, a TV recorder 22B, a TV 22C, a PC 22D, an audio system 22E, or a video camera 22F via a home network 21. The domestic system 2 is also connected to the Internet 3 via a communication device 23 such as a modem or a router.

The home server 20 is a computer device comprising information processing resources such as a CPU 24, a memory 25, an input device 26, an output device 27, an input/output device 28, a storage apparatus 29, and a connection device 30, and is connected to the home network 21 from the connection device 30.

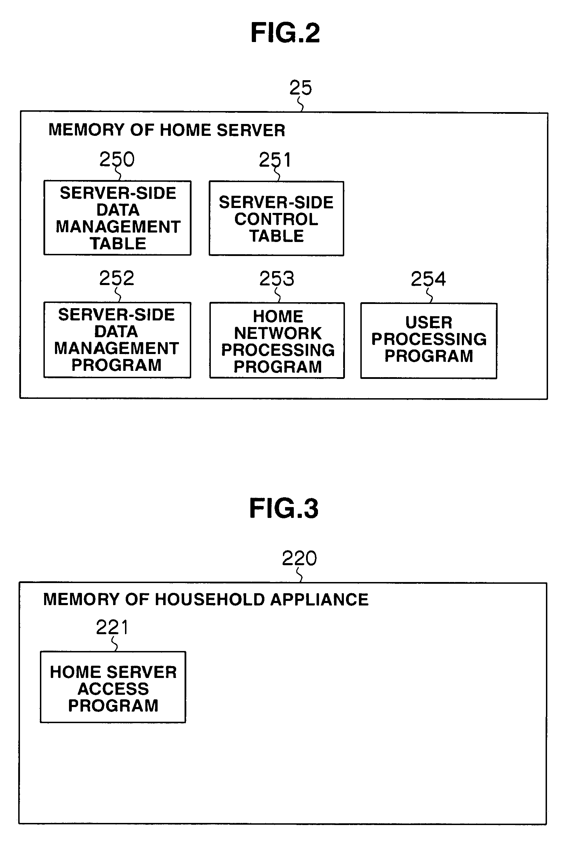

The memory 25 of the home server 20, as shown in Fig. 2, stores a server-side data management table 250, a server-side control table 251, a server-side data management program 252, a home network processing program 253, and a user processing program 254 described later.

The input device 26 of the home server 20 is configured from a keyboard, a mouse or the like. The output device 27 of the home server 20 is configured from a display, a speaker or the like.

The input/output device 28 is used for inputting and outputting data through a recording medium. Although this embodiment explains a mode where the household appliance 22 is connected to the home network 21, as described above, for instance, a recording medium such as a USB memory of the household appliance 22 may also be directly input from the input/output device 28 of the home server 20 so as to enable access to the home server 20.

The storage apparatus 29 is an apparatus for storing data to be stored in the household appliance 22, and is configured from an auxiliary storage apparatus such as a hard disk or a primary storage apparatus utilizing a semiconductor memory.

The home server 20 may also be mounted on a household appliance such as a set top box having the same configuration as the home server 20.

The various household appliances 22 are domestic digital electrical appliances comprising information processing resources such as a CPU (not shown), a memory 220, an input device (not shown), and an output device (not shown).

The memory 220 of the household appliance 22, as shown in Fig. 3, stores a home server access program 221 for the household appliance 22 to access the home server 20. Since the home server access program 221 is a program required for the household appliance 22 to access the home server 20 via the home network 21, it is not required when the household appliance 22 accesses the home server 20 through a recording medium.

The online storage center 4 comprises a server 40, a storage apparatus 41, and a communication device 42, and the server 40, the storage apparatus 41 and the communication device 42 are connected via an internal LAN (Local Area Network) 43.

The server 40 is a computer device comprising information processing resources such as a CPU 44, a memory 45, an input device 46, an output device 47, a storage apparatus 48, and a connection device 49, and is connected to the internal LAN 43 via the connection device 49.

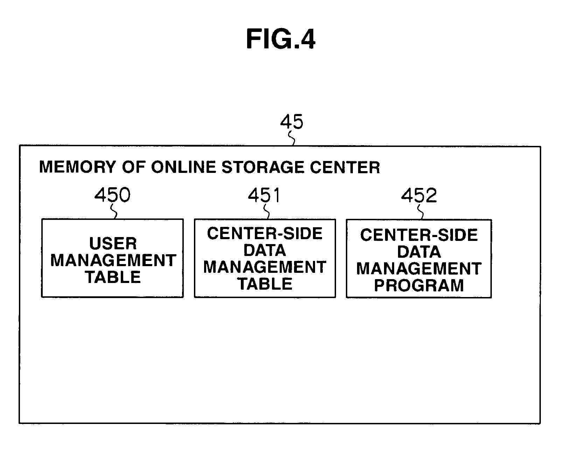

The memory 45 of the online storage center 4, as shown in Fig. 4, stores a user management table 450, a center-side data management table 451, and a center-side data management program 452 described later.

The storage apparatus 41 is configured so that a plurality of hard disk drives are managed according to a RAID (Redundant Array of Independent/Inexpensive Disks) system.

A hard disk drive, for example, is configured from an expensive disk drive such as a SCSI (Small Computer System Interface) disk, or an inexpensive disk drive such as a SATA (Serial AT Attachment) disk or an optical disk drive. One or more logical volumes LU are defined in the storage area provided by the plurality of hard disk drives.

A unique identifier (LUN: Logical Unit Number) is allocated to the respective logical volumes LU. The input and output of data is conducted by combining the identifier and a unique number (LBA: Logical Block Address) allocated to each block to be the address, and designating such address.

The contents provider 5 is a contents dealer that sells digital contents such as music and movies by being connected to the home 2 (customer), the online storage center 4 and the mobile device 7 via the Internet 3, and comprise a server 50, a storage apparatus 51 and a communication device 52. The server 50, the storage apparatus 51 and the communication device 52 are connected via an internal LAN (Local Area Network) 53.

The wireless base station 6 is an apparatus or an installation site for conducting wireless communication with a mobile device 7 such as a mobile phone 7A or a car navigation system 7B.

(2) Configuration of Various Tables

Configuration of the various tables is now explained. The data referred to in the ensuing explanation is contents data that is stored in the household appliance 22, the mobile device 7, the home server 20, the online storage center 4, or the contents provider 5.

(2-1) Server-side Data Management Table

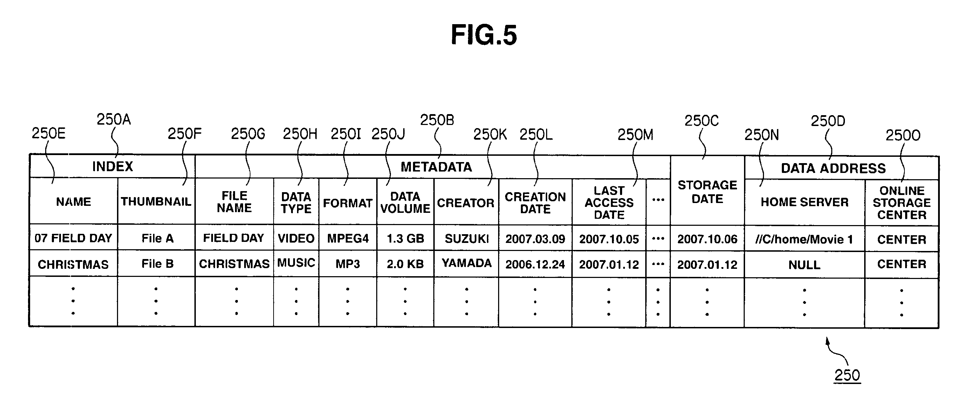

The server-side data management table 250 shown in Fig. 5 is a table retained by the home server 20, and is used for managing a plurality of data created, recorded, or stored in the various household appliances 22. The server-side data management table 250 is configured from an "index" column 250A, a "metadata" column 250B, a "storage date" column 250C, and a "data address" column 250D.

The "index" column 250A is provided for indexing a plurality of data, and is configured from a "name" column 250E showing the data name, and a "thumbnail" column 250F showing the file name in thumbnail format. Information stored in the "index" column 250A is referred to as index data. Index data is management information of data.

Items of the "index" column 250A are not limited to the foregoing item columns, and other items may be added.

The "metadata" column 250B stores attribute information of data, and is configured from a "file name" column 250G showing the file name of data, a "data type" column 250H showing the type of data, a "format" column 250I showing the type of data format, a "data volume" column 250J showing the data volume of data, a "creator" column 250K showing the person who created the data, and a "last access date" column 250M showing the latest date in which the data was accessed. The attribute information of data stored in the "metadata" column 250B is referred to as metadata. Metadata is management information of data.

Items of the "metadata" column 250B are not limited to the foregoing item columns, and other items may be added.

The "storage date" column 250C stores information concerning the date on which data or metadata was stored in the memory 45 of the online storage center 4. If data or metadata is not stored in the memory 45 of the online storage center 4, "NULL" is displayed in the "storage date" column 250C.

The "data address" column 250D stores information concerning the storage destination of data, and is configured from a "home server" column 250N, and an "online storage center" column 2500. If data is stored in the home server 20, the storage destination address in the home server 20 is stored, and if data is not stored in the home server 20, "NULL" is displayed. Similarly, if data is stored in the online storage center 4, "center" is displayed, and if data is not stored in the online storage center 4, "NULL" is displayed.

(2-2) Control Table

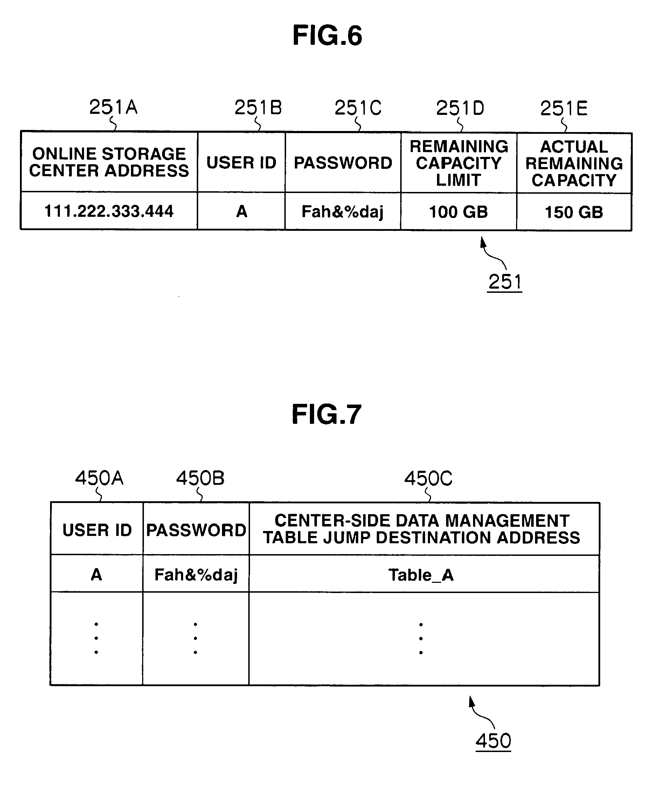

The server-side control table 251 shown in Fig. 6 is a table retained by the home server 20, and is used for storing information concerning the conditions required in transferring data, index data and metadata from the home server 20 to the online storage center 4.

The server-side control table 251 is configured from an "online storage center address" column 251A showing the address of the online storage center 4, a "user ID" column 251B and a "password" column 251C required for accessing the online storage center 4, a "remaining capacity limit" column 251 D showing the capacity threshold value for securing the capacity in the storage apparatus 29, and an "actual remaining capacity" column 251 E showing the actual remaining capacity in the storage apparatus 29.

The server-side control table 251 may also be encrypted and stored in the memory 25.

(2-3) User Management Table

The user management table 450 shown in Fig. 7 is a table retained by the online storage center 4, and is used for managing the user information of data transferred from the home server 20.

The user management table 450 is configured from a "user ID" column 450A showing the user who accessed the online storage center 4 and transferred data from the home server 20, a "password" column 450B showing the user's password, and a "center-side data management table jump destination address" column 450C showing the destination of the management table having information concerning the data transferred from the user. Information concerning the data refers to data, as well as index data and metadata as management information of such data.

For example, "Table_A" of the "center-side data management table jump destination address" column 450C shows that it is possible to jump to the center-side data management table 451 storing information concerning the data in the user's possession.

(2-4) Center-side Data Management Table

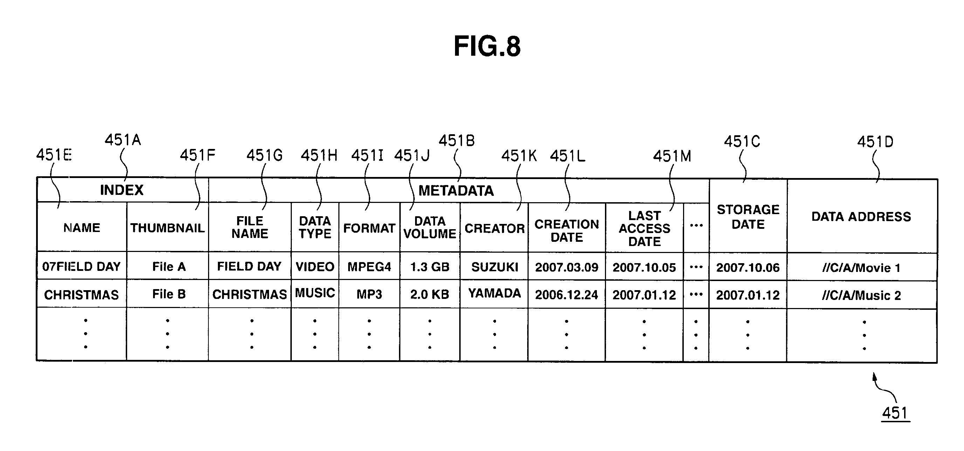

The center-side data management table 451 shown in Fig. 8 is a table retained by the online storage center 4, and is used for managing data transferred from the home server 20 for each user.

The center-side data management table 451 is configured from an "index" column 451A, a "metadata" column 451 B, a "storage date" column 451C, and a "data address" column 451D. In the center-side data management table 451, information stored in the "index" column 451A and the "metadata" column 451B is information to be stored in the "index" column 250A and the "metadata" column 250B of the server-side data management table 250, and can be stored as is.

The "storage date" column 451C stores information concerning the date on which data was received by the online storage center 4.

The "data address" column 451 D stores information concerning the storage destination of data in the online storage center 4. If data is stored in the online storage center 4, the storage destination address in the online storage center 4 is stored, and, if data is not stored in the online storage center 4, "NULL" is displayed.

Contents of the "index" column 451A and the "metadata" column 451B are the same as the contents of the "index" coiumn 250A and the "metadata" column 250B, and the detailed explanation thereof is omitted.

(3) Data Transfer Processing

Data transfer processing of hierarchically storing data, which is stored in the household appliance 22, in the home server 20 and the online storage center 4 for creating backup data is now explained.

(3-1) Home Server Access Processing 1

Here, home server access processing 1 for storing data stored in various household appliances 22 in the home server 20 is explained. The home server access processing 1 is executed by the CPU (not shown) of the various household appliances 22 based on the home server access program 221.

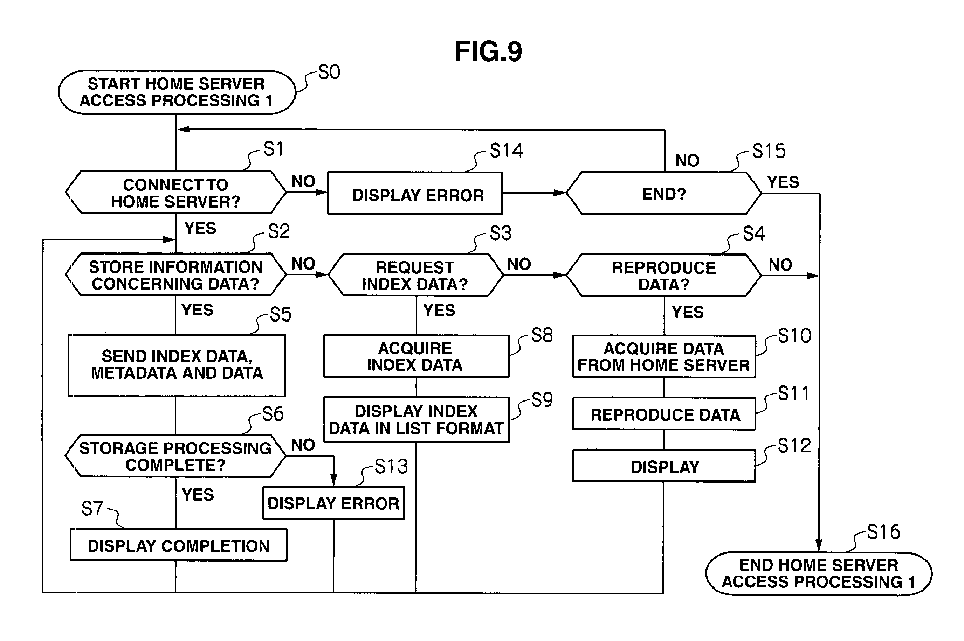

As shown in Fig. 9, the CPU of the various household appliances 22 starts the home server access processing 1 when the user using the household appliance 22 operates the data stored in the household appliance 22 (S0).

When the CPU of the household appliance 22 connects to the home server 20 (S1: YES), the user selects whether to store information concerning the data (S2), request the index data (S3), or reproduce the data (S4).

If the user selects to store information concerning the data (S2), the CPU of the household appliance 22 sends the index data, metadata and data to be stored as designated by the user to the home server 20 (S5).

The CPU of the household appliance 22 determines whether the processing for storing the index data, metadata and data in the home server 20 is complete (S6). When the CPU of the household appliance 22 determines that the foregoing processing is complete (S6: YES), it displays a completion message to the user (S7), and then once again executes the selection processing from step S2 to step S4. Here, if the user does not select any step among step S2 to step S4, the CPU of the household appliance 22 ends the home server access processing 1 (S16).

When the CPU of the household appliance 22 determines that the processing for storing the index data, metadata and data in the home server 20 is not complete (S6: NO), it displays an error message to the user (S13), and then once again executes the selection processing from step S2 to step S4.

If the user selects to request the index data (S3), the CPU of the household appliance 22 acquires the requested index data from the server-side data management table 250 of the home server 20 (S8), displays an index list of the requested index data to the user (S9), and then once again executes the selection processing from step S2 to step S4.

If the user selects to reproduce the data (S4), the CPU of the household appliance 22 acquires the data from the home server 20 (S10), and reproduces such data (S11). Subsequently, the CPU of the household appliance 22 displays a reproduction completion message to the user (S12), and then once again executes the selection processing from step S2 to step S4.

When the CPU of the household appliance 22 determines at step S1 that it is not to connect to the home server 20 (S1: NO), it displays an error message to the user (S14). The CPU of the household appliance 22 determines whether to end the home server access processing (S15), and once again executes the processing at step S1 when the processing is not to be ended (S15: NO), and ends the home server access processing 1 when the processing is to be ended (S15: YES) (S16).

(3-2) Home Network Processing

Home network processing to be executed when the home server 20 receives some kind of request on information concerning the data from the various household appliances 22 at step S2, step S3 or step S4 is now explained. The home network processing is executed by the CPU 24 of the home server 20 based on the home network processing program 253.

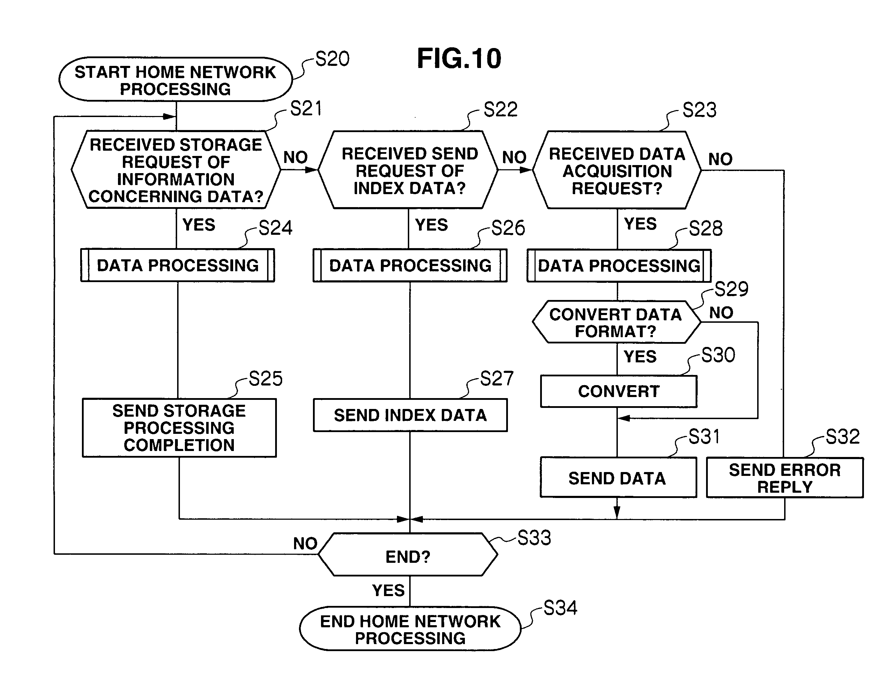

As shown in Fig. 10, the CPU 24 of the home server 20 starts the home network processing when it receives some kind of request on information concerning the data from the household appliance 22 (S20). Although the present embodiment explains a case where the request from the household appliance 22 is received via the home network 21, the user may directly operate the input device 26 and issue the request.

The CPU 24 of the home server 20 determines whether the request from the household appliance 22 is a request for storing information concerning the data (S21), a request for sending the index data (S22), or a request for acquiring the data (S23).

When the CPU 24 of the home server 20 receives a request for storing information concerning the data from the household appliance 22 (S21: YES), it executes the data processing described later (S24), and sends a message to the household appliance 22 to the effect that the processing for storing the index data, metadata and data received from the household appliance 22 is complete (S25).

Subsequently, the CPU 24 of the home server 20 ends the home network processing (S34) when it determines that the processing of all requests from the household appliance 22 is complete (S33: YES), and once again determines which step among step S21 to step S23 the request from the household appliance 22 corresponds to when it determines that the processing of all requests is not complete (S33: NO).

When the CPU 24 of the home server 20 receives a request for sending the index data from the household appliance 22 (S22: YES), it executes the data processing described later (S26), and sends the index data to the household appliance 22 (S27). Subsequently, the CPU 24 of the home server 20 executes the processing at step S33, and then ends the home network processing (S34).

When the CPU 24 of the home server 20 receives a request for acquiring the data from the household appliance 22 (S23: YES), it executes the data processing described later to acquire the data (S28), and then determines whether to convert the data format of the acquired data (S29).

Here, conversion of the data format refers to converting the size or format of data into a format that can be processed by the household appliance. For instance, at this step, the CPU 24 reduces the data size, or converts the format from a JPEG format to a GIF format.

When the CPU 24 of the home server 20 receives a request for acquiring data from the household appliance 22 (S23) and the conversion of the data format has been simultaneously requested, the CPU 24 of the home server 20 determines that it is necessary to convert the data format of the acquired data (S29: YES), converts the data format (S30), and sends the data to the household appliance 22 (S31).

Meanwhile, when the CPU 24 of the home server 20 determines that it is not necessary to convert the data format of the acquired data (S29: NO), it sends the data to the household appliance 22 without converting the data format (S31).

Subsequently, the CPU 24 of the home server 20 executes the processing at step S33, and then ends the home network processing (S34).

If the request from the household appliance 22 does not correspond to any step among step S21 to step S23 (S23: NO), the CPU 24 of the home server 20 sends an error reply to the home server 20 (S33).

If the user directly operates the input device 26, results of the processing at steps S25, S27, S31 and S32 are notified to the user by the CPU 24 outputting such results to the output device 27.

(3-3) Data Processing

(3-3-1) Data Processing 1

Data processing 1 to be executed by the CPU 24 of the home server 20 based on the server-side data management program 252 at step S24, step S26 or step S28 is now explained in detail.

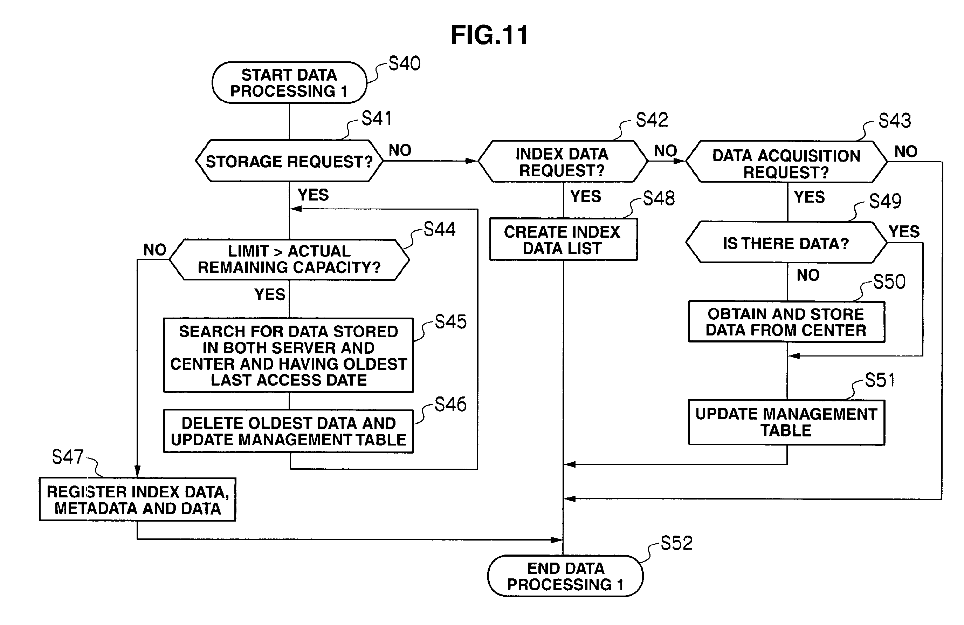

As shown in Fig. 11, the CPU 24 of the home server 20 starts the data processing 1 when it determines that the request concerning the data received from the household appliance 22 corresponds to one of the steps among step S21 to step S23 (S40).

The CPU 24 of the home server 20 determines whether the request from the household appliance 22 is a request for storing information concerning the data (S41), a request for sending the index data (S42), or a request for acquiring the data (S43).

When the CPU 24 of the home server 20 determines that the request from the household appliance 22 is a request for storing information concerning the data (S41: YES), it refers to the server-side control table 251, and determines whether the capacity limit of the storage apparatus 29 is greater than the actual remaining capacity (S44). The capacity limit of the storage apparatus 20 is a pres-set threshold value of the unused capacity.

When the CPU 24 of the home server 20 determines that the actual remaining capacity is less than the capacity limit (S44: YES), this means that the actual unused capacity in the storage apparatus 29 is considerably low. Thus, the CPU 24 accesses the online storage center 4, and searches for data that is stored in both the home server 20 and the online storage center 4, and having the oldest last access date (S45).

In another embodiment, the CPU 24 searches for the data, that is stored in both the home server 20 and the online storage center 4, by referring to the "home server" column 250N, the "online storage center" column 2500, and the "last access date" column 250M of the server-side data management table 250. According to this embodiment, because the CPU 24 can search for the data without accessing the online storage center 4, the data traffic amount between the home server 20 and the online storage center 4 can be reduced.

When the CPU 24 of the home server 20 refers to the data management table 250 and locates the data, which is found at S45 (i.e. the data stored in both the home server 20 and the online storage center 4 and having the oldest last access date), it deletes such data from the storage apparatus 29, and enters "NULL" in the "home server" column 250N of the server-side data management table 250 corresponding to the oldest data (S46).

Subsequently, the CPU 24 of the home server 20 once again compares the remaining capacity limit and the actual remaining capacity (S44). If the actual remaining capacity is greater than the capacity limit (S44: NO), since this means that there is still sufficient actual unused capacity in the storage apparatus 29, the CPU 24 of the home server 20 registers the storage-requested index data, metadata, and data in the server-side data management table 250 (S47), and then ends the data processing (S52).

Incidentally, the CPU 24 of the home server 20 may add the item of "metadata" column 250B of the server-side data management table 250 at step S47.

When the CPU 24 of the home server 20 determines that the request from the household appliance 22 is a request for sending the index data (S42: YES), it refers to the server-side data management table 250 and creates an index data list (S48), and then ends the data processing 1 (S52).

When the CPU 24 of the home server 20 determines that the request from the household appliance 22 is a request for acquiring the data (S43: YES), it refers to the "home server" column 250N of the server-side data management table 250, and determines whether the data designated by the user is stored in the home server 20 (S49).

If "NULL" is entered in the "home server" column 250N of the server-side data management table 250 (S49: NO), the CPU 24 of the home server 20 obtains the data designated by the user from the online storage center 4, and stores such data in the storage apparatus 29 (S50). Subsequently, the CPU 24 of the home server 20 updates the "last access date" column 250M and the "home server" column 250N of the server-side data management table 250 (S51), and then ends the data processing 1 (S52).

Meanwhile, when there is a storage destination address in the "home server" column 250N of the server-side data management table 250 (S49: YES), the CPU 24 of the home server 20 acquires data from the storage destination address in the storage apparatus 29, updates the "last access date" column 250M of the server-side data management table 250 (S51), and then ends the data processing 1 (S52).

Like this, with the data processing 1, the home server 20 searches for and deletes old data when the actual remaining capacity in the storage apparatus 29 is less than the remaining capacity limit, and then newly stores information concerning the data of the household appliance 22. In addition, since the management information of the data will remain even when the old data in the home server 20 is deleted, it is possible to maintain the remaining capacity limit in the storage apparatus 29 at all times.

(3-3-2) Data Processing 2

Data processing 2, which is a different processing format than the data processing 1, is now explained. The data processing 2 is also executed by the CPU 24 of the home server 20 based on the server-side data management program 252.

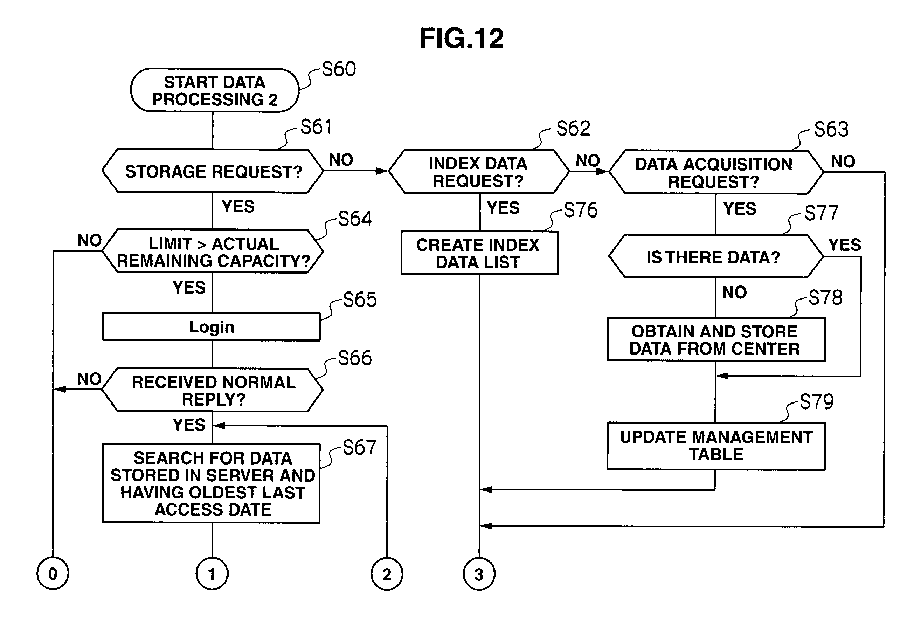

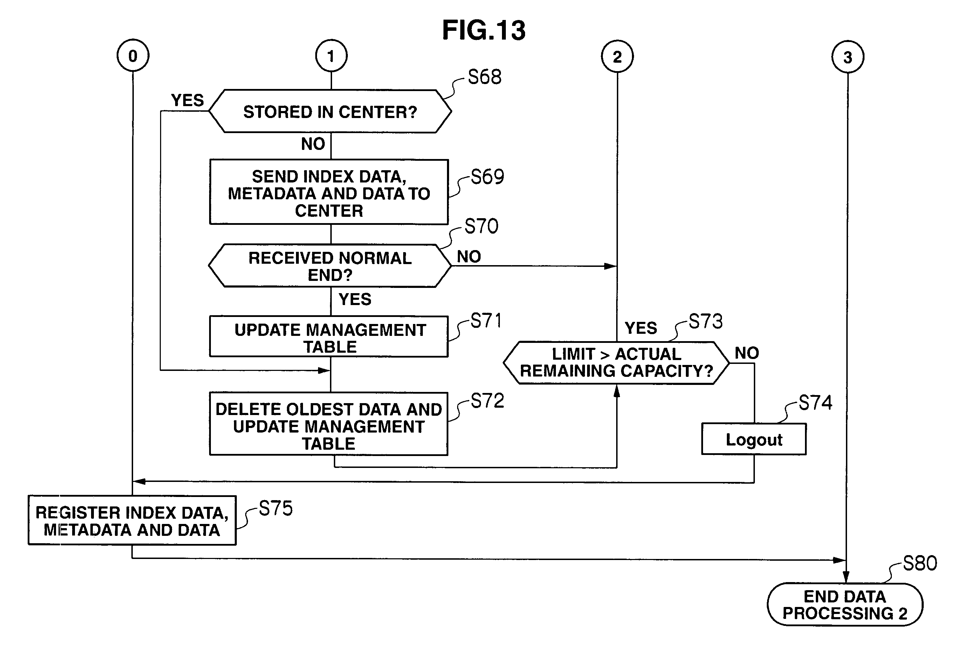

As shown in Fig. 12 and Fig. 13, the CPU 24 of the home server 20 executes the processing from step S60 to step S64 according to the same routine as the processing from step S40 to step S44.

When the CPU 24 of the home server 20 determines that the actual remaining capacity is less than the capacity limit (S64: YES), it logs onto the online storage center 4 registered in the server-side control table 251, and connects to the center 4 (S65).

When the CPU 24 of the home server 20 receives a normal reply from the online storage center 4 (S66: YES), it refers to the server-side data management table 250, and searches for data stored in the home server 20 and having the oldest last access date (S67).

The CPU 24 of the home server 20 refers to the server-side data management table 250, and determines whether information concerning the data has been stored in the online storage center 4 (S68). When the CPU 24 of the home server 20 determines that such information concerning the data has not been stored (S68: NO), it sends the index data, metadata and data to the online storage center 4 (S69).

When the CPU 24 of the home server 20 receives a completion notice from the center 4 to the effect that the index data, metadata and data have been stored normally (S70), it registers "center" in the "online storage center" column 2500 (S71), and updates the table contents.

Subsequently, the CPU 24 of the home server 20 deletes the oldest data searched at step S67 from the storage apparatus 29, and updates the "home server" column 250N of the server-side data management table 250 corresponding to the oldest data by entering "NULL" (S72).

When the CPU 24 of the home server 20 determines at step S68 that information concerning the data has been stored in the online storage center 4 (S68: YES), it directly executes the processing at step S72 described above.

The CPU 24 of the home server 20 once again compares the actual remaining capacity and the capacity limit in the storage apparatus 29 (S73). If the actual remaining capacity is less than the capacity limit (S73: YES), since this means that the unused capacity in the storage apparatus 29 is still insufficient even after deleting the oldest data from the storage apparatus 29, the CPU 24 of the home server 20 once again executes the processing at step S67.

Meanwhile, when the CPU 24 of the home server 20 determines that the actual remaining capacity is greater than the capacity limit (S73: NO), since this means that there is sufficient unused capacity in the storage apparatus 29, it logs off of the online storage center 4 (S74), registers the index data, metadata and data in the server-side data management table 250 (S75), and then ends the data processing 2 (S80).

When the CPU 24 of the home server 20 determines at step S64 that the actual remaining capacity is greater than the capacity limit (S64: NO), since this means that there is sufficient unused capacity in the storage apparatus 29, the CPU 24 registers the index data, metadata and data in the server-side data management table 250 (S75), and then ends the data processing 2 (S80). When the CPU 24 of the home server 20 could not receive a normal reply from the online storage center 4 at step S66 (S66: NO), the CPU 24 also executes the same processing routine.

When the CPU 24 of the home server 20 determines that the request concerning the data received from the household appliance 22 is a request for sending the index data (S62: YES), it refers to the server-side data management table 250 and creates an index data list (S76), and then ends the data processing 2 (S80).

When the CPU 24 of the home server 20 determines that the request concerning the data received from the household appliance 22 is a request for acquiring the data (S63: YES), it thereafter executes the processing from step S77 to step S79 according to the same processing routine as the processing from step S49 to step S51, and then ends the data processing 2 (S80).

Like this, with the data processing 2, as with the data processing 1, the home server 20 searches for and deletes old data when the actual remaining capacity in the storage apparatus 29 is less than the remaining capacity limit. Moreover, with the data processing 2, when all information concerning the data to be stored is not stored in the center 4, the old data in the storage apparatus 29 is deleted after all information concerning the data is sent to and stored in the center 4. Since the management information of the data will remain even when the old data in the home server 20 is deleted with the data processing 2 also, it is possible to maintain the remaining capacity limit in the storage apparatus 29 at all times.

(3-4) Server-side Data Management Processing

Server-side data management processing for managing the data in the storage apparatus 29 between the home server 20 and the online storage center 4 is now explained.

(3-4-1) Server-side Data Management Processing 1

The server-side data management processing 1 is foremost explained. The server-side data management processing 1 is processing for the home server 20 to access the online storage center 4 and manage the data in the storage apparatus 29, and is executed by the CPU 24 of the home server 20 based on the server-side data management program 252.

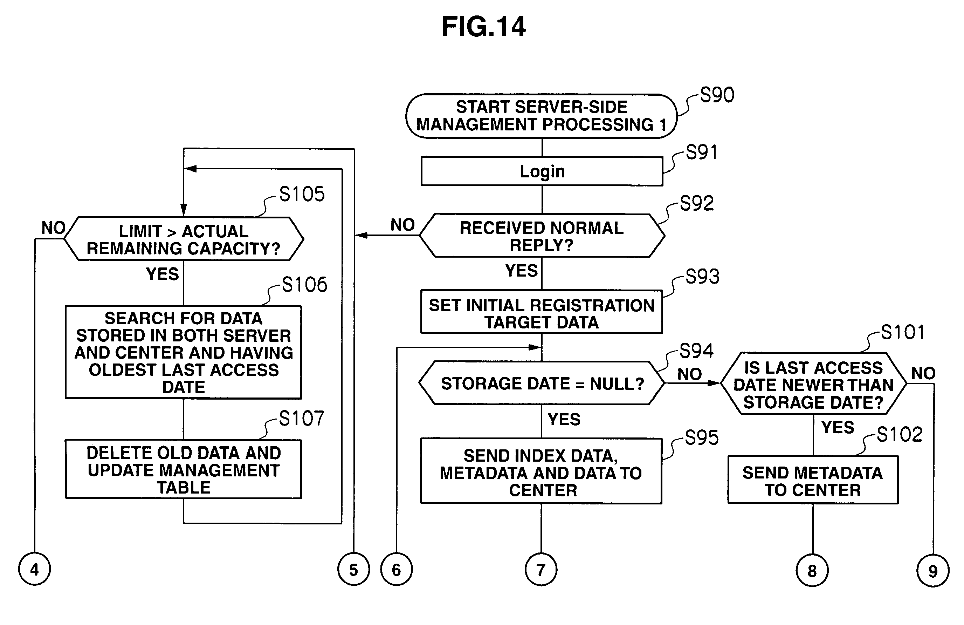

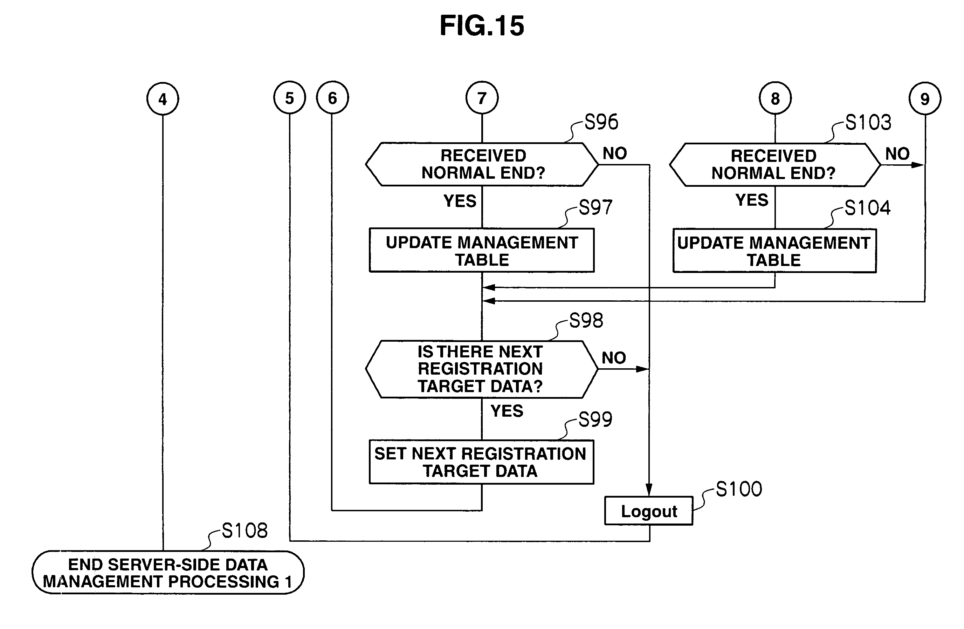

Specifically, as shown in Fig. 14 and Fig. 15, the CPU 24 of the home server 20 starts the server-side data management processing 1 when the actual remaining capacity in the storage apparatus 29 exceeds a pre-set threshold value, when the program processing of home network processing or the like is ended, when a pre-set timer is exceeded, or a command is issued from the online storage center 4 (S90).

Foremost, when the CPU 24 of the home server 20 logs onto the online storage center 4 (S91) and receives a normal reply from the center 4 (S92: YES), it refers to information concerning the data stored in the server-side data management table 250, selects the data to be registered in the center 4 (hereinafter referred to as the "registration target data"), and sets the initial registration target data (S93).

Subsequently, the CPU 24 of the home server 20 refers to the server-side data management table 250 and determines whether the "storage date" column 250C corresponding to the registration target data is a blank column (NULL) (S94).

If the "storage date" column 250C is a blank column (NULL) (S94: YES), since this means that the data, index data and metadata have not yet been stored in the center 4, the CPU 24 of the home server 20 sends the registration target data and its index data and metadata to the online storage center 4 (S95).

When the CPU 24 of the home server 20 receives a message from the center 4 to the effect that the storage of information concerning the registration target data has been completed normally (S96: YES), it registers the date, which is the date the data was stored in the center 4, in the "storage date" column 250C of the server-side data management table 250 corresponding to the registered data, registers "center" in the "online storage center" column 2500, and updates the contents of the table 250 (S97).

When the CPU 24 of the home server 20 determines that there is subsequent registration target data to be registered in the center 4 among the information concerning the data stored in the server-side data management table 250 (S98: YES), it sets the subsequent registration target data (S99), and once again executes the processing at step S94.

When the CPU 24 of the home server 20 fails to receive a message from the center 4 at step S96 to the effect that the storage has been completed normally (S96: NO), or when there is no registration target data to be subsequently registered at step S98 (S98: NO), it logs off of the center 4 (S100), and executes the processing at step 105 described later.

Meanwhile, if the storage date" column 250C is not a blank column (NULL) at step S94 (S94: YES), since this means that the data, index data and metadata have been stored in the center 4, the CPU 24 of the home server 20 thereafter refers to the server-side data management table 250, and determines whether the last access date on which the storage apparatus 29 of the home server 20 was accessed is a more recent date than the date on which the data or metadata was stored in the center 4 (S101).

If the last access date is a more recent date than the stored date (S101: YES), the CPU 24 of the home server 20 sends only the metadata concerning the registration target data to the center 4 (S102), and updates only the metadata in the center 4.

Subsequently, when the CPU 24 of the home server 20 receives a message from the center 4 to the effect that the storage of metadata has been completed normally (S103: YES), it updates the "storage date" column 250C of the server-side data management table 250 (S104), and thereafter executes the processing at step S98 described above.

If the stored date is a more recent date than the last access date at step S101 (S101: NO), since this means that the latest data is stored in the center 4, the routine proceeds to the processing at step S98 described above.

If the metadata could not be normally stored from the center 4 (S103: NO), the routine also proceeds to the processing at step S98 described above.

Although the CPU 24 is determining one data at a time among a plurality of registration target data from step S92 to step S104, registration target data among all registration target data of the server-side data management table 250 may be partially or collectively sent to the center 4, or the metadata may be partially or collectively sent to the center 4.

When the CPU 24 of the home server 20 executes the processing from step S105 to step S107 according to the same routine as the processing from step S44 to step S46 (Fig. 11), it then ends the server-side data management processing 1 (S108).

Like this, with the server-side data management processing 1, the timing of sending information concerning the data to the center 4 and the timing of deleting old data are different. The timing of sending information concerning the data to the center 4 is triggered when it is determined that the registration target data is not stored in the center 4, but the timing of deleting old data is triggered when it is determined that the remaining capacity in the storage apparatus 29 has fallen below the capacity limit.

(3-4-2) Server-side Data Management Processing 2

Server-side data management processing 2, which is a different processing format than the server-side data management processing 1, is now explained. The server-side data management processing 2, as with the server-side data management processing 1, is processing for the home server 20 to access the online storage center 4 and manage data, and is executed by the CPU 24 of the home server 20 based on the server-side data management program 252.

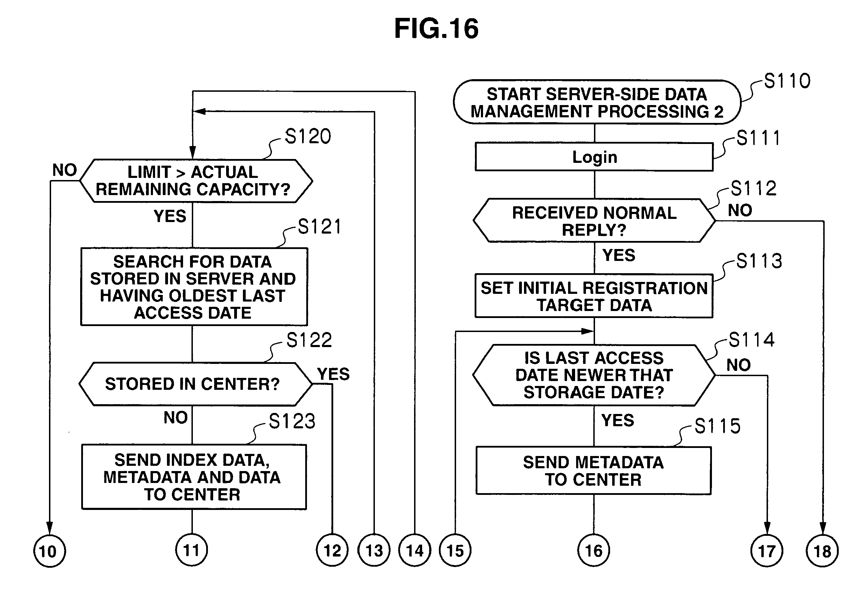

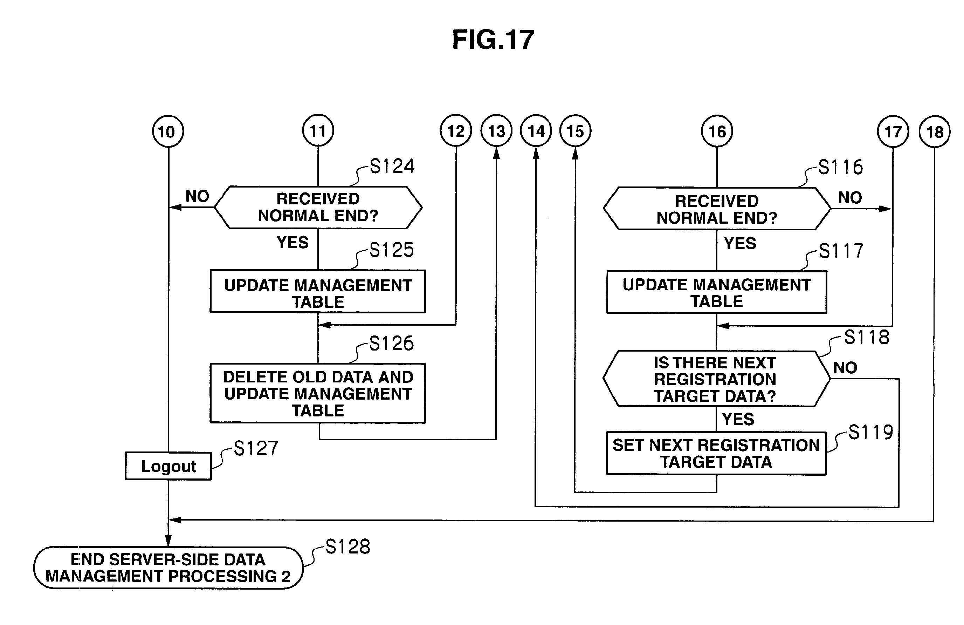

As shown in Fig. 16 and Fig. 17, the trigger for starting the server-side data management processing 2 is the same as the trigger for starting the server-side data management processing 1 (S110).

When the CPU 24 of the home server 20 logs onto the online storage center 4 (S111) and receives a normal reply (S112: YES), it refers to the information concerning the data stored in the server-side data management table 250, selects the registration target data, and sets the initial registration target data (S113).

The CPU 24 of the home server 20 executes the processing from step S114 to step S117 according to the same processing routine as the processing from step S101 to step S104 described above (Fig. 14 and Fig. 15), and registers the registration target data in the center 4.

Subsequently, the CPU 24 of the home server 20 executes the processing at step S118 and step S119 according to the same processing routine as the processing at step S98 and step S99 described above (Fig. 15), thereafter sets the registration target data, and then once again executes the processing at step S114.

When there is no more data to be registered in the center 4, the CPU 24 of the home server 20 subsequently compares the remaining capacity limit set in the storage apparatus 29 and the actual remaining capacity (S120). When the CPU 24 determines that the remaining capacity limit is less than the actual remaining capacity (S120: YES), since this means that the remaining capacity in the storage apparatus 29 is insufficient, it executes the processing from step S121 to step S126. The processing from step S121 to step S126 is the same as the processing from step S67 to step S72 described above.

When the CPU 24 determines at step S120 that the remaining capacity limit is greater than the actual remaining capacity (S120: NO), it logs off of the center 4 (S127), and ends the server-side data management processing 2 (S128).

Like this, with the server-side data management processing 2, the data, index data and metadata of old data are stored in the center when the remaining capacity in the storage apparatus 29 falls below the capacity limit, and the foregoing data is deleted from the home server 20 while leaving only the management information of such data in the home server 20.

(3-4-3) Center-side Data Management Processing

A case where the online storage center 4 executes data management processing based on a request from the home server 20 that executed the server-side data management processing 1 or the server-side data management processing 2, or a request from the mobile device 7 described later is now explained. The center-side data management processing is executed by the CPU 44 of the online storage center 4 (hereinafter referred to as "the CPU 44 of the center 4") based on the center-side data management program 452.

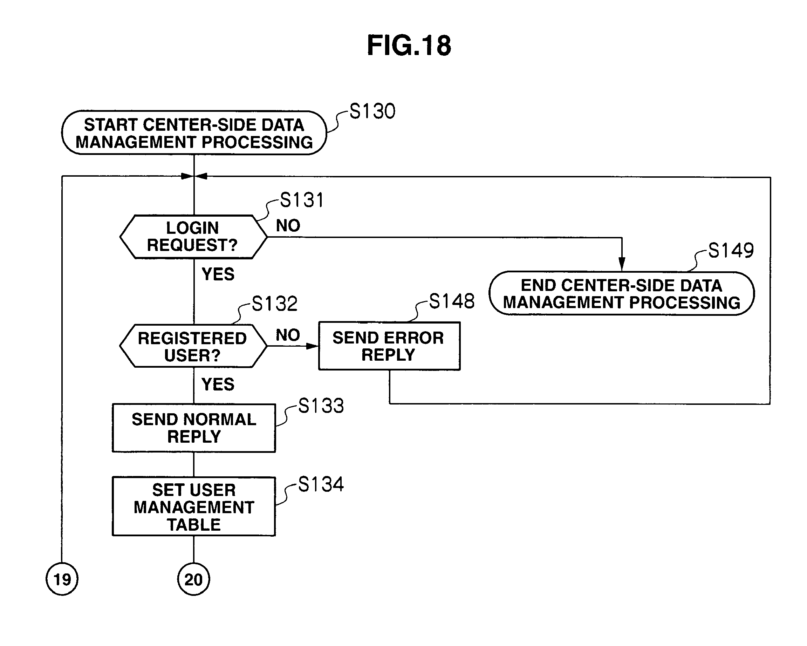

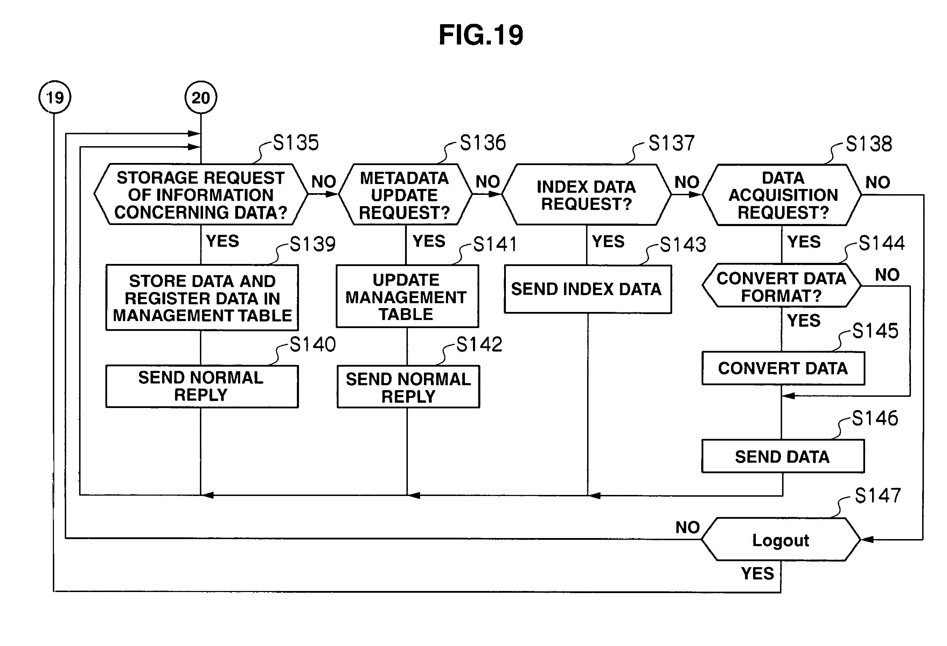

As shown in Fig. 18 and Fig. 19, the CPU 44 of the center 4 starts the center-side data management processing when the home server 20 or the mobile device 7 accesses the center 4 (S130).

Foremost, when there is a login request from the home server 20 or the mobile device 7 (S131: YES), the CPU 44 of the center 4 determines whether the user is registered in the center 4 (S132). When the CPU 44 of the center 4 confirms that the user is a registered user (S132: YES), it sends a normal reply to the home server 20 or the mobile device 7 (S133). The CPU 44 of the center 4 thereafter sets the user management table 450 and jumps to the address of such registered user's center-side data management table 451 (S134).

Subsequently, the CPU 44 of the center 4 determines whether the request from the home server 20 or the mobile device 7 is a request for storing information concerning the data (S135), a request for updating the metadata (S136), a request for sending the index data (S137), or a request for acquiring the data (S138).

If the request from the home server 20 or the mobile device 7 is a request for storing information concerning the data (S135: YES), the CPU 44 of the center 4 stores the registration target data in the storage apparatus 41, and registers the index data and metadata concerning the registration target data in the center-side data management table 450 (S139). When registering metadata in the center-side data management table 450 (S139), the item columns of metadata may be increased.

The CPU 44 of the center 4 thereby sends a normal reply to the home server 20 or the mobile device 7 (S140).

If the request from the home server 20 or the mobile device 7 is a request for updating the metadata (S136: YES), the CPU 44 of the center 4 updates the contents of the metadata concerning the data designated by the home server 20 or the mobile device 7 in the center-side data management table 450 (S141). The CPU 44 of the center 4 thereby sends a normal reply to the home server 20 or the mobile device 7 (S142).

If the request from the home server 20 or the mobile device 7 is a request for sending the index data (S137: YES), the CPU 44 of the center 4 sends the index data concerning the data designated by the home server 20 or the mobile device 7 in a list format (S143).

If the request from the home server 20 or the mobile device 7 is a request for acquiring the data (S138: YES), the CPU 44 of the center 4 determines whether the conversion of data format is simultaneously being requested (S144). If the conversion of data format is also being requested (S144: YES), the CPU 44 of the center 4 converts the data format of the data to be sent (S145), and sends the data to the home server 20 or the mobile device 7 (S146).

Meanwhile, if the conversion of data format is not being requested (S144: YES), the CPU 44 of the center 4 sends the data to be sent to the home server 20 or the mobile device 7 (S146). If the request from the home server 20 or the mobile device 7 is a log out request (S147: YES), the CPU 44 of the center 4 logs out and then ends the data management processing (S149).

If the next request from the home server 20 or the mobile device 7 corresponds to a request among the requests from step S135 to step S138, the CPU 44 of the center 4 once again executes the processing according to the respective requests.

When the CPU 44 of the center 4 determines at step S132 that the request was made by an unregistered user (S132: NO), it sends an error reply (S148), and returns to step S131.

(4) Mobile Processing

Mobile processing to be executed when the mobile device 7 issues some kind of request to the home server 20 or the online storage center 4 between the mobile device 7 and the home server 20 or online storage center 4 is now explained.

(4-1) Configuration of Home Server Memory

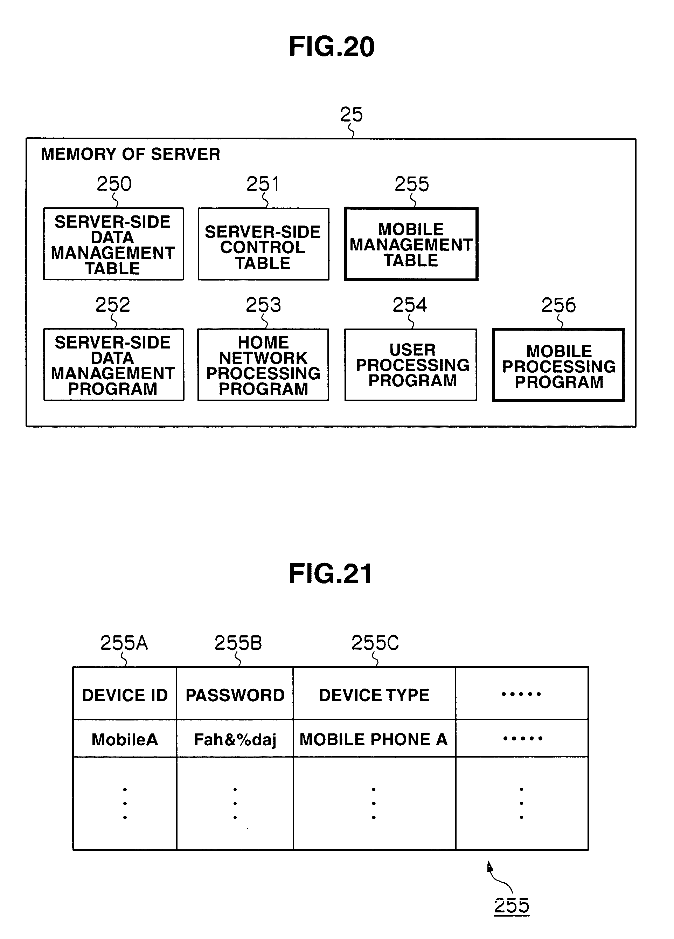

In order to execute this mobile processing, the memory 25 of the home server 20 stores, as shown in Fig. 20, a mobile management table 255 and a mobile processing program 256 described later in addition to the various tables 250, 251 and the various programs 252 to 254 explained above.

The mobile management table 255, as shown in Fig. 21, is a table for authorizing the mobile device 7 to access the home server 20. The mobile management table 255 is configured from a "device ID" column 255A showing the identifier of the mobile device 7, a "password" column 255B showing the password for the mobile device 7 to access the home server 20, and a "device type" column 255C showing the type of mobile device 7. The mobile management table 255 is not limited to the foregoing item columns 255A to 255C, and other item columns may be added.

(4-2) Configuration of Mobile Device Memory

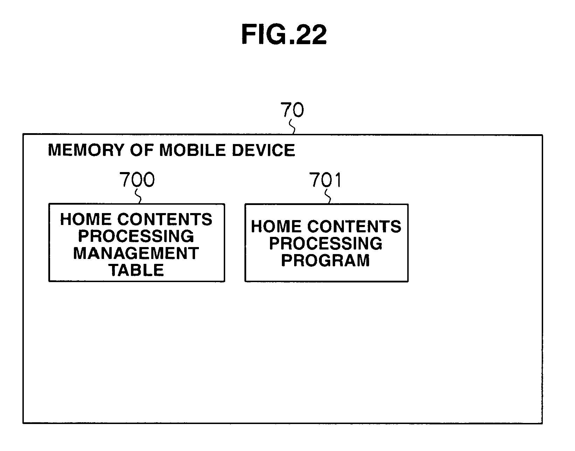

In addition, in order to execute this mobile processing, the memory 70 of the mobile device 7, as shown in Fig. 22, stores a home contents processing management table 700 and a home contents processing program 701 described later.

The home contents processing management table 700 is a table for transferring data stored in the mobile device 7 to the home server 20 or the online storage center 4, or storing management information required for referring to the data stored in the home server 20 or the online storage center 4.

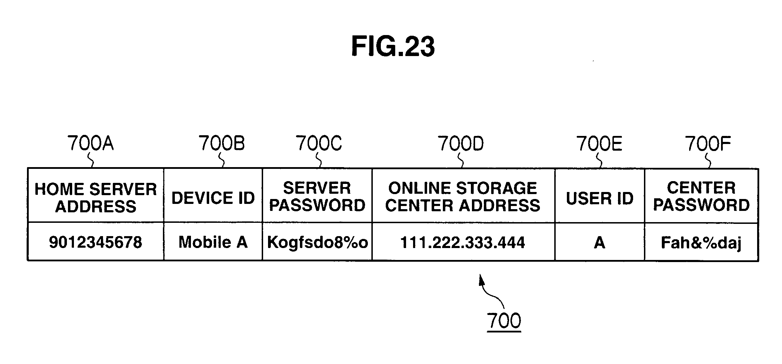

In addition, as shown in Fig. 23, the home contents processing management table 700 is configured from a "home server address" column 700A showing the home server 20 to send and receive data, a "device ID" column 700B showing the identifier of the mobile device 7, a "server password" column 700C showing the password for accessing the home server 20, an "online storage center address" column 700D showing the online storage center 4 to send and receive data, a "user ID" column 700E and a "center password" column 700F showing the identifier and the password required for accessing the online storage center 4.

(4-3) Home Contents Processing

A case where the mobile device 7 accesses the home server 20 or the online storage center 4 and performs home contents processing is now explained. The home contents processing is executed by the CPU (not shown) of the mobile device 7 based on the home contents processing program 701.

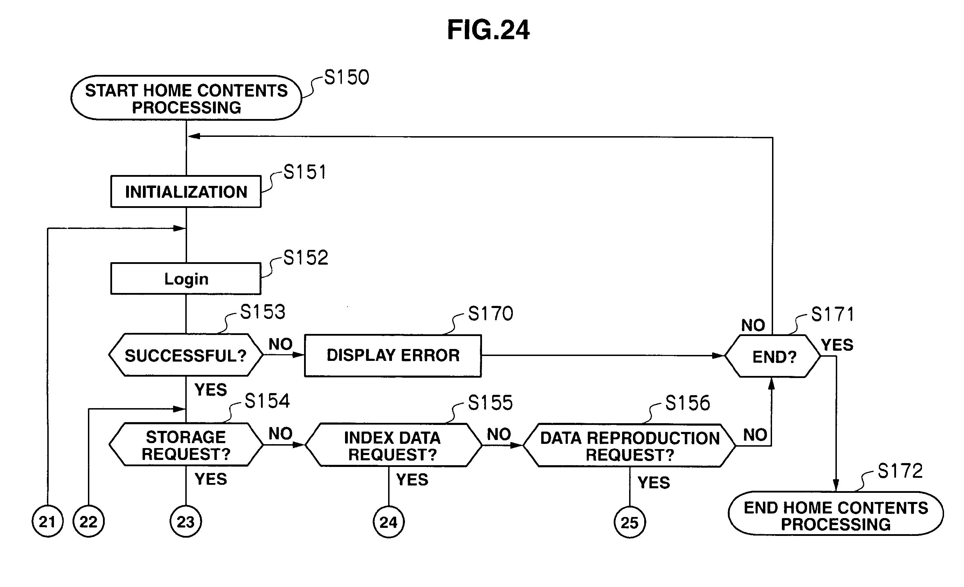

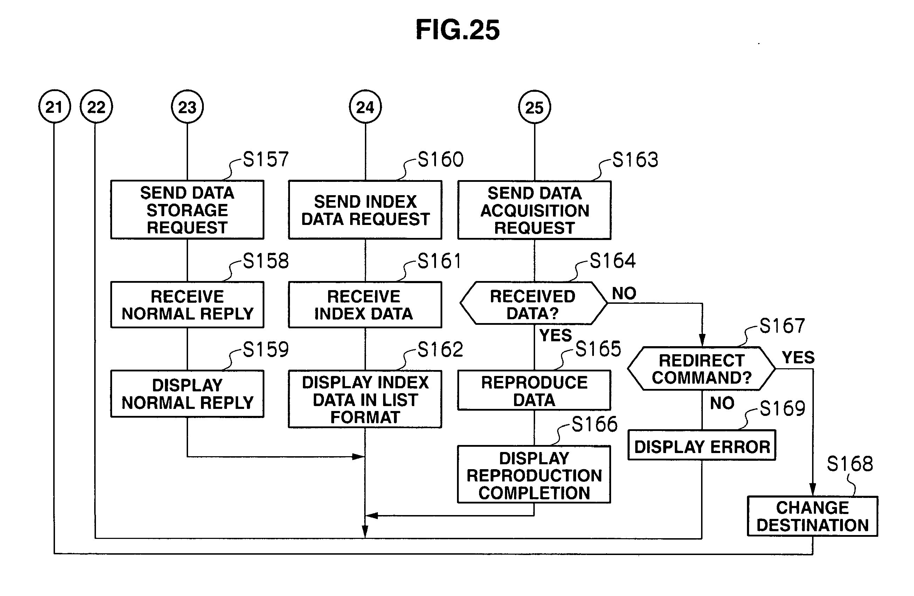

Specifically, as shown in Fig. 24 and Fig. 25, the CPU of the mobile device 7 starts the home contents processing when the user accesses the home server 20 or the online storage center 4 and executes some kind of processing to the data in the mobile device 7 or the data stored in the home server 20 or the online storage center (S150).

The CPU of the mobile device 7 foremost refers to the home contents processing management table 700 in order to access the home server 20, designates the home server 20 of the access destination, and performs initialization (S151).

The CPU of the mobile device 7 logs onto the designated home server 20 (S152), and, upon successfully logging on (S153: YES), selects whether to store information concerning the data (S154), request the sending of index data (S155), or request the reproduction of data (S156).

If the user selects to store information concerning the data (S154: YES), the CPU of the mobile device 7 sends a request for storing the designated index data, metadata and data designated by the user to the home server 20 (S157). When the CPU of the mobile device 7 receives a notice from the home server 20 to the effect that the index data, metadata and data have been stored normally (S158), it displays a normal reply to the user (S159), and once again executes the selection processing from step S154 to step S156. Here, if the user does not select any step, the CPU of the mobile device 7 confirms completion (S171: YES), and then ends the home contents processing (S172).

If the user selects the request for sending index data (S155), it sends the request for sending index data to the home server 20 (S160). When the CPU of the mobile device 7 receives the index data sent from the home server 20 (S161), it displays the index data to the user in a list format (S162). The CPU of the mobile device 7 thereby once again executes the selection processing from step S154 to step S 156.

If the user selects the request for reproducing data (S156), the CPU of the mobile device 7 sends a request for acquiring data (S163). When the CPU of the mobile device 7 thereafter normally receives the requested data from the home server 20 (S164: YES), it reproduces the requested data (S165). Subsequently, when the CPU of the mobile device 7 displays a message to the user to the effect that the reproduction is complete (S166), it once again executes the selection processing from step S154 to step S156.

Meanwhile, when the CPU of the mobile device 7 was not able to receive the requested data from the home server 20 at step 164 (S164: NO), it subsequently determines whether a redirect command for changing the destination and reissuing a data request has been received from the home server 20 (S167).

When receiving the online storage center address, the user ID, and the center password based on the redirect command received from the home server 20, columns 700D to 700F in the home contents processing management table 700 may be omitted.

When the CPU of the mobile device 7 determines that a redirect command has been received (S167: YES), it changes the destination to the online storage center 4 (S168). Subsequently, the CPU of the mobile device 7 logs onto the online storage center 4 (S152), and, when the logon is successful (S153: YES), it once again executes the selection processing from step S154 to step S156 to the online storage center 4.

When the CPU of the mobile device 7 determines at step S167 that a redirect command will not be issued (S167: NO), it displays an error message to the user (S169), and executes the selection processing from step S154 to step S156.

When the CPU of the mobile device 7 fails to logon at step 153 (S153: NO), it displays an error message to the user (S170), and once again executes the processing at S151 when the processing is not to be ended (S171: NO), and ends the home contents processing when the processing is to be ended (S171: YES) (S172).

Like this, with the home contents processing, if the data requested by the user is not stored in either the home server 20 or the online storage center 4, the destination may be changed and the data requested by the user may be once again requested to the online storage center 4 or the home server 20.

(4-4) Mobile Processing

(4-4-1) Mobile Processing

A case where the home server 20 performs the mobile processing according a request from the mobile device 7 is now explained. The mobile processing is executed by the CPU 24 of the home server 20 based on the mobile processing program 256.

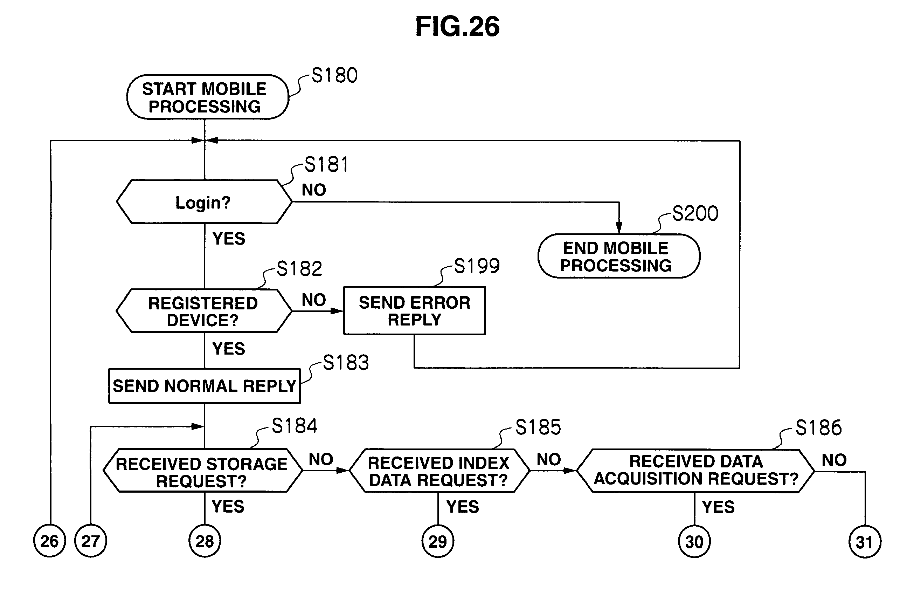

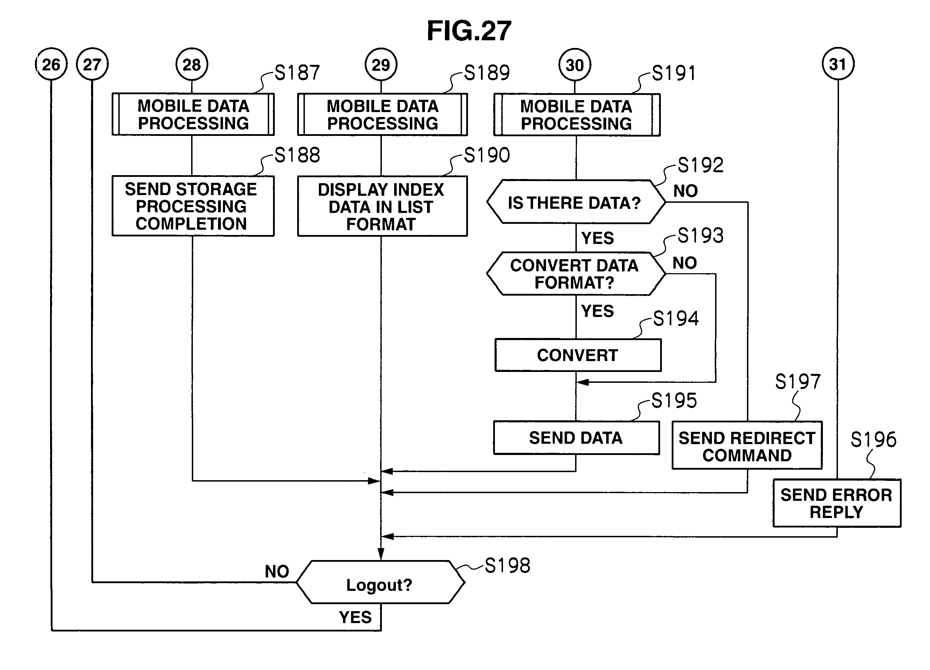

Specifically, as shown in Fig. 26 and Fig. 27, the CPU 24 of the home server 20 starts the mobile processing when there is some kind of request from the mobile device 7 (S180).

When logged on from the mobile device 7 (S181: YES), the CPU 24 of the home server 20 determines whether the mobile device 7 is a registered device based on the mobile management table 255 (S182), and, when it is confirmed that the mobile device 7 is a registered device (S182: YES), it sends a normal reply to the mobile device 7 (S183).

Subsequently, the CPU 24 of the home server 20 executes the processing from step S184 to step S196 to be performed to the mobile device 7 according to the same processing routine as the processing from step S21 to step S32 (Fig. 10). However, although the processing from step S21 to step S32 was processing to be executed to the household appliance 22, the processing from step S184 to step S196 is processing to be executed to the mobile device 7.

At step S197, the CPU 24 of the home server 20 sends a command (redirect command) to the mobile device 7 for connecting to the online storage center 4.

When the CPU 24 of the home server 20 determines that the mobile device 7 has not logged off (S198: NO), it once again executes the selection processing from step S184 to S186. Meanwhile, if the mobile device 7 has logged off (S198: YES), the CPU 24 of the home server 20 ends the mobile processing (S200).

When the CPU 24 of the home server 20 confirms that the mobile device 7 is not a registered device (S182: NO), it sends an error reply to the mobile device 7 (S 199).

(4-4-2) Mobile Data Processing 1

Mobile data processing 1 to be continuously executed by the CPU 24 of the home server 20 based on the mobile processing program 256 at step S187, step S189 or step S191 described in the mobile processing is now explained in detail.

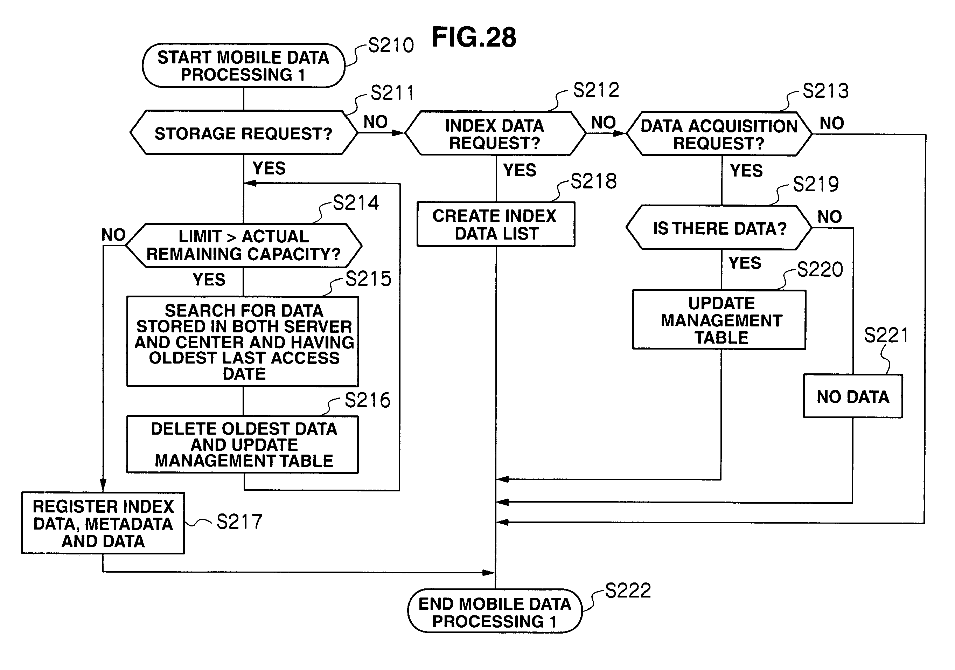

As shown in Fig. 28, the CPU 24 of the home server 20 starts the mobile data processing 1 when it determines that the request concerning the data received from the mobile device 7 corresponds to any request among the requests from step S184 to step S186 (S210).

The CPU 24 of the home server 20 determines whether the request concerning the data received from the mobile device 7 is a request for storing information concerning the data (S211), a request for sending the index data (S212), or a request for acquiring the data (S213).

Subsequently, when the CPU 24 of the home server 20 executes the processing from step S214 to step S220 according to the respective requests based on the same processing routine as the processing from step S44 to step S49 and step S51 (Fig. 11), it ends the mobile data processing 1 (S222).

When the CPU 24 of the home server 20 determines at step S219 that the data requested by the mobile device 7 does not exist in the storage apparatus 29 (S219: NO), it considers this to be "no data" (S221), and then ends the mobile data processing 1 (S222).

Like this, with the mobile data processing 1, if the data requested by the mobile device 7 does not exist in the home server 20, this can be determined as "no data." Thus, the home server 20 is able to issue a redirect command to the mobile device 7 for redirecting its connection to the online storage center 4.

(4-4-3) Mobile Data Processing 2

Mobile data processing 2, which is a different processing format than the mobile data processing 1, is now explained. The mobile data processing 2 is also executed by the CPU 24 of the home server 20 based on the mobile processing program 256.

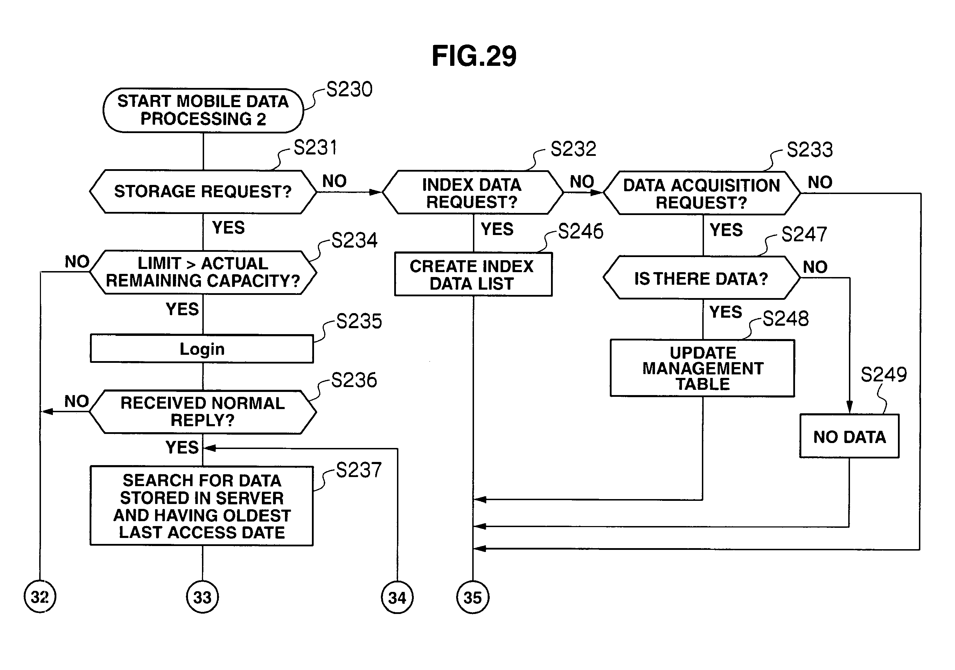

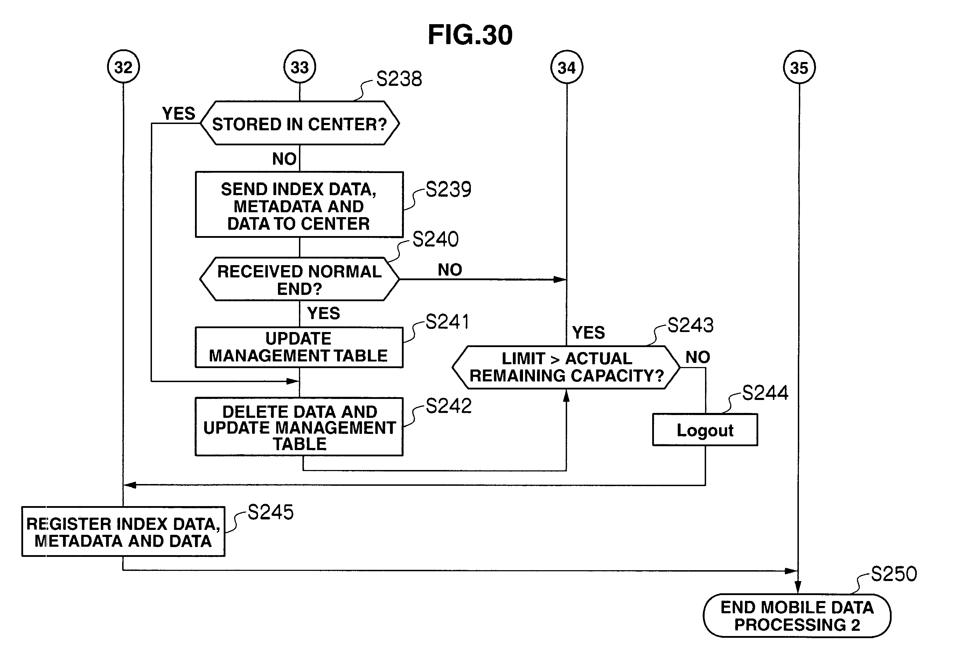

As shown in Fig. 29 and Fig. 30, the CPU 24 of the home server 20 starts the mobile data processing 2 when it determines that the request concerning the data received from the mobile device 7 corresponds to a request among the requests from step S184 to step S186 (S230).

The CPU 24 of the home server 20 thereby determines whether the request concerning the data received from the mobile device 7 is a request for storing information concerning the data (S231), a request for sending the index data (S232), or a request for acquiring the data (S233).

Subsequently, the CPU 24 of the home server 20 executes the processing from step S234 to step S248 according to the respective requests based on the same processing routine as the processing from step S64 to step S77 and step S79 (Fig. 12 and Fig. 13), and then ends the mobile data processing 2 (S250).

When the CPU 24 of the home server 20 determines at step S247 that the data requested by the mobile device 7 does not exist in the storage apparatus 29 (S247: NO), it considers this to be "no data" (S249), and then ends the mobile data processing 2 (S250).

Even with the mobile data processing 2, if the data requested by the mobile device 7 does not exist in the home server 20, this can be determined as "no data." Thus, the home server 20 is able to issue a redirect command to the mobile device 7 for redirecting its connection to the online storage center 4.

(5) Home Server Access Processing 2

Home server access processing 2 for the CPU (not shown) of the various household appliances 22 to automatically store the data stored in the various household appliances 22 in the home server 20 is now explained.

(5-1) Configuration of Household Appliance Memory

Foremost, the memory 220' of the various household appliances 22 for realizing the home server processing 2 is explained.

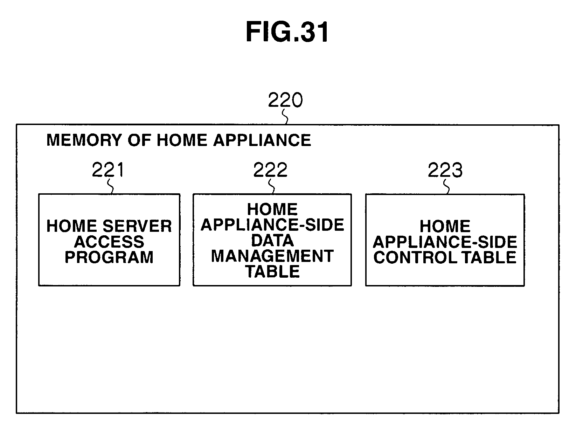

The memory 220' of the various household appliances 22, as shown in Fig. 31, stores a household appliance-side data management table 222, a household appliance-side control table 223, and a home server access program 221.

The household appliance-side data management table 222 is a table retained by the various household appliances 22, and is used for managing the data of the various household appliances 22.

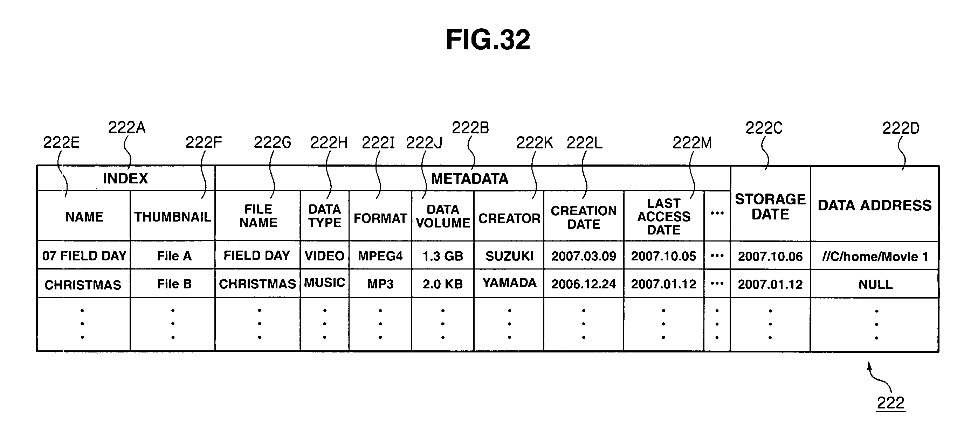

As shown in Fig. 32, the household appliance-side data management table 222 is configured from an "index" column 222A, a "metadata" column 222B, a "storage date" column 222C, and a "data address" column 222D.

Among the columns of the household appliance-side data management table 222, information stored in the "index" column 222A and the "metadata" column 222B is the information to be stored in the "index" column 250A and the "metadata" column 250B of the server-side data management table 250, and is stored as is.

The "storage date" column 451C stores information concerning the date on which the data was stored in the home server 20.

The "data address" column 451 D stores information concerning the storage destination of data in the household appliance 22. If data is stored in the household appliance 22, the storage destination address in the household appliance 22 is stored, and, if data is not stored in the household appliance 22, "NULL" is displayed.

Incidentally, the "name" column 222E, the "thumbnail" column 222F, the "file name" column 222G, the "data type" column 222H, the "format" column 222J, the "creator" column 222K, the "creation date" column 222L, and the "last access date" column 222M are of the same contents as the item columns explained with reference to the server-side data management table 250, and the detailed explanation thereof is omitted.

The household appliance-side control table 223 is a table retained by the various household appliances 22, and is used for storing information concerning the conditions required for processing the information concerning the data in the household appliance 22 with the home server 20.

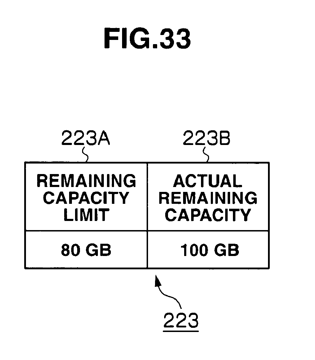

As shown in Fig. 33, the household appliance-side control table 223 is configured from a "remaining capacity limit" column 223A showing the capacity threshold value for securing the capacity in the memory 220' of the household appliance 22, and an "actual remaining capacity" column 223B showing the actual remaining capacity in the memory 220' of the household appliance 22.

(5-2) Home Server Access Processing 2

The home server access processing 2 to be performed by the household appliance 22 to the home server 20 in this kind of configuration of the household appliance 22 is now explained. The home server access processing 2 is executed by the CPU of various household appliances 22 based on the home server access program 221.

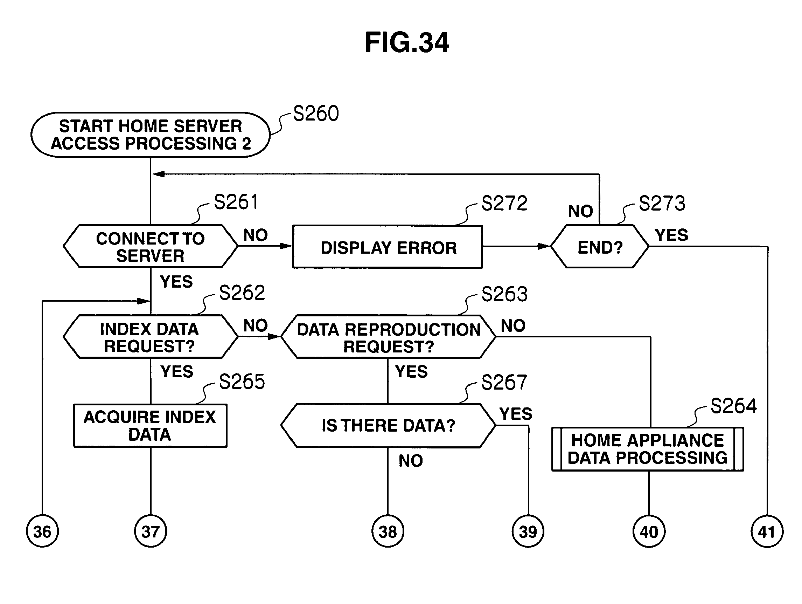

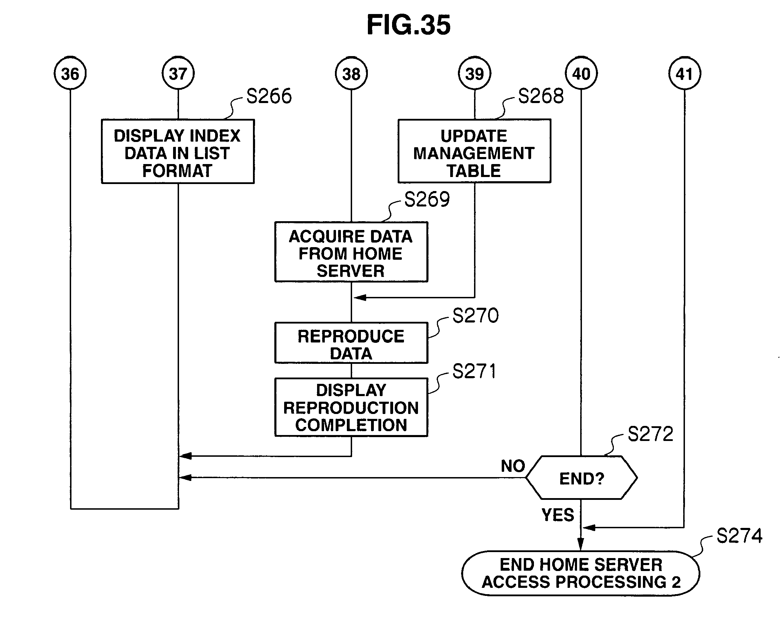

As shown in Fig. 34 and Fig. 35, the CPU of various household appliances 22 starts the home server access processing 2 when the user of the various household appliances 22 operates the data stored in the various household appliances 22 (S260).

When the CPU of the various household appliances 22 is to connect to the home server 20 (S261: YES), the user selects whether to request the home server 20 to send the index data (S262), reproduce the data (S263), or process information concerning the data in the household appliance 22 (S264).

If the user selects the request for sending index data (S262), the CPU of the various household appliances 22 acquires the index data from the home server 20 (S265), displays the index data to the user in a list format (S266), and then once again executes the selection processing from step S262 to step S264.

If the user selects to reproduce the data (S263), the CPU of the various household appliances 22 confirms whether the data to be reproduced exists in the household appliance 22 (S267). When the CPU of the household appliance 22 refers to the household appliance-side data management table 222 and determines that the data to be reproduced exists in the household appliance 22 (S267: YES), it acquires such data to be reproduced from the memory 220' of the household appliance 22, updates the household appliance-side data management table 222 (S268), and then reproduces the data (S270). Subsequently, the CPU of the various household appliances 22 displays a message to the user to the effect that the reproduction is complete (S271), and then once again executes the selection processing from step S262 to step S264.

Meanwhile, when the CPU of the household appliance 22 refers to the household appliance-side data management table 222 and determines that the data to be reproduced does not exist in the household appliance 22 (S267: NO), it acquires such data to be reproduced from the home server 20, updates the management table (S269), and then reproduces the data (S270). Subsequently, the CPU of the various household appliances 22 displays a message to the user to the effect that the reproduction is complete (S271), and then once again executes the selection processing from step S262 to step S264.

If the request was not a data reproduction request at step S263, or the user selects to store information concerning the data (S264), the CPU of the household appliance 22 executes the household appliance data processing described later, and ends the home server access processing 2 when the home server access processing 2 is to be ended (S272: YES) (S274). The CPU of the household appliance 22 once again executes the selection processing from step S262 to step S264 when the home server access processing 2 is not to be ended (S272: NO).

If the CPU of the household appliance 22 was not able to connect to the home server 20 at step S261 (S261: NO), it displays an error message to the user, and ends the home server access processing 2 when the home server access processing 2 is to be ended as is (S273: YES) (S274). The CPU of the household appliance 22 once again executes the processing at step S261 when the home server access processing 2 is not to be ended (S273: NO).

(5-3) Household Appliance Data Processing

The household appliance data processing at step S264 is further explained. The household appliance data processing is also executed by the CPU of the various household appliances 22 based on the home server access program 221.

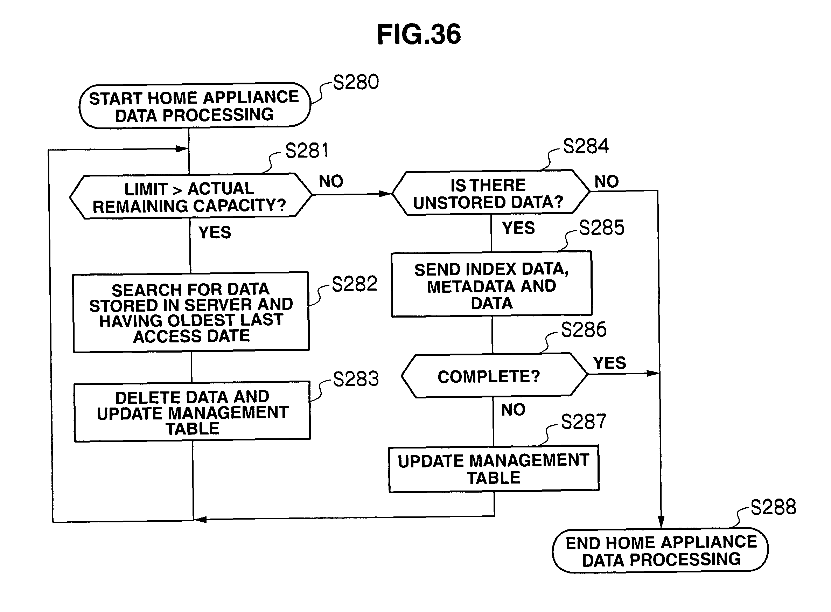

Foremost, the CPU of the various household appliances 22 starts the household appliance data processing shown in Fig. 36 when the user did not issue a data reproduction request, or the user selected to store information concerning the data (S264) (S280).

Subsequently, the CPU of the household appliance 22 refers to the household appliance-side control table 223 and preliminarily determines whether the capacity limit, which is the unused capacity threshold value of the memory 220' in the household appliance 22, is greater than the actual remaining capacity (S281).

When the CPU of the household appliance 22 determines that the actual remaining capacity is less than the capacity limit (S281: YES), this means that the remaining capacity in the memory 220' is lower than the threshold value, and the unused capacity is considerably low. Thus, the CPU of the household appliance 22 refers to the data management table 250 of the home server 20, and searches for data that is stored in the home server 20 and having the oldest last access date (S282). In another embodiment, the household appliance 22 searches for the data, that is stored in the home server 20 and having the oldest last access date, by referring to the "data address" column 222D, the "storage data" column 222C, and the "last access date" 222M of the home appliance-side data management table 222. According to this embodiment, the data traffic amount between the household appliance 22 and the home server can be reduced, because the household appliance 22 can search the data without accessing the home server 20.

When the CPU of the household appliance 22 locates data stored in the home server 20 and having the oldest last access date, it deletes such data from the memory 220', and updates the "data address" column 222D of the household appliance-side data management table 222 corresponding to the oldest data by entering "NULL" (S283).

When deleting the foregoing data, all management information concerning such data may also be deleted from the household appliance-side data management table.

Subsequently, the CPU of the household appliance 22 once again compares the remaining capacity limit and the actual remaining capacity (S281), and, when the actual remaining capacity is greater than the capacity limit (S281: NO), it thereafter determines whether there is data in the memory 220' which has not yet been stored in the home server 20 (S284).

When the CPU of the household appliance 22 determines that unsaved data is remaining in the memory 220' (S284: YES), it sends the storage-requested index data, metadata and data to the home server 20 (S285). Here, the CPU of the household appliance 22 may collectively or partially send the unsaved data to the home server 20. If information concerning the unsaved data is partially sent, since this means that the unsaved data is still remaining (S286: NO), the CPU of the household appliance 22 updates the "storage date" column 222C of the household appliance-side data management table 222 (S287), and then once again performs the determination processing at step S281.

Meanwhile, when the CPU of the household appliance 22 determines that there is no remaining unsaved data (S286: YES), it ends the household appliance data processing (S288).

Like this, with the household appliance data processing, the household appliance 22 searches for and deletes old data when the actual unused capacity in the memory 220' is less than the remaining capacity limit. In addition, even when there is sufficient actual unused capacity in the memory 220', all information concerning the data that is not stored in the home server 20 may be sent to and stored in the home server 20.

(6) Effect of Embodiments

According to the present embodiment, data processing of the respective household appliances can be executed based on the user's request without the user having to manually manage the data volume of the respective household appliances or the storage capacity of the respective household appliances. In addition, when a user issues a data storage request, the backup of data in the respective household appliances can be conducted with the online storage center in addition to the home server.

The present invention can by broadly applied to storage systems having one or more online storage centers.

## Claims

1. A storage system, comprising:
one or more household appliances;
a home server connected to said one or more household appliances via a home network, storing contents data and management information of said contents data received from said one or more household appliances, and pre-set with an unused capacity limit; and
an online storage center connected to said home server via a network;
wherein, when the actual unused capacity in said home server falls below said capacity limit, said home server sends to and stores in said online storage center prescribed contents data and management information of said prescribed contents data among said contents data and management information of said contents data stored in said home server, and deletes said prescribed contents data from said home server while leaving the management information of said prescribed contents data stored in said home server.

2. The storage system according to claim 1,
wherein, when said household appliance issues a storage request of said contents data, said home server compares the actual unused capacity and said capacity limit in said home server.

3. The storage system according to claim 1 or claim 2,
wherein, when said household appliance issues an acquisition request of said contents data, said home server confirms whether said home server requested contents data is stored in said home server and, when said requested contents data is not stored in said home server, acquires said requested contents data from said online storage center, and stores said requested contents data in said home server.

4. The storage system according to any one of claims 1 to 3,
wherein, when the actual unused capacity in said home server falls below said capacity limit, said home server searches for and selects contents data with the oldest access date among a plurality of contents data stored in both said online storage center and said home server, sends the selected contents data and management information of said selected contents data to said online storage center, and thereafter deletes said selected contents data from said home server while leaving the management information of said selected contents data.

5. The storage system according to any one of claims 1 to 4,
wherein a wireless base station for conducting wireless communication with a mobile device is connected to said home server or said online storage center via said network; and
wherein, when said mobile device issues a storage request of contents data of said mobile device, said home server compares the actual unused capacity and said capacity limit in said home server and, when the actual unused capacity in said home server is less than said capacity limit, sends said contents data and the management information of said contents data stored in said home server to said online storage center, and deletes said contents data from said home server while leaving the management information of said contents data among said contents data and the management information of said contents data sent from said online storage center.

6. The storage system according to claim 5,
wherein, when said mobile device issues an acquisition request of said contents data, said home server searches for said requested contents data in said home server and, when said requested contents data does not exist in said home server, issues a redirect command for causing said mobile device to change the destination to said online storage center and reissue an acquisition request of said contents data.

7. The storage system according to claim 5 or claim 6,
wherein said home server deletes said contents data after sending said contents data and the management data of said contents data stored in said home server to said online storage center.

8. The storage system according to any one of claims 7 to 8,
wherein, after deleting said contents data, said home server compares the actual unused capacity and said capacity limit in said home server after said deletion of contents data.

9. The storage system according to any one of claims 1 to 8,
wherein said one or more household appliances are pre-set with a household appliance unused capacity limit, and
wherein said home server compares the actual unused capacity in said one or more household appliances and said household appliance capacity limit and, when the actual unused capacity in said one or more household appliances is less than said household appliance capacity limit, deletes contents data with the oldest access date among a plurality of contents data stored in both said home server and said one or more household appliances.

10. A storage system, comprising:
one or more household appliances;
a home server connected to said one or more household appliances via a home network, and storing contents data and management information of said contents data received from said one or more household appliances; and
an online storage center connected to said home server via a network;
wherein said home server sends to and stores in said online storage center said contents data and the management information of said contents data stored in said home server, and deletes contents data among said contents data and the management information of said contents data stored in said home server at a timing that is independent from the sending of said contents data and the management information of said contents data to said online storage center.

11. The storage system according to claim 10,
wherein, after sending said contents data and the management information of said contents data stored in said home server to said online storage center, said home server compares the actual unused capacity and the unused capacity limit in said home server, and deletes said contents data from said home server when the actual unused capacity in said home server is less than said capacity limit.

12. The storage system according to claim 11,
wherein, when said household appliance issues a storage request of said contents data, said home server compares the actual unused capacity in said home server and said capacity limit.

13. The storage system according to any one of claims 10 to 12,
wherein, when said household appliance issues an acquisition request of said contents data, said home server searches for said requested contents data in said home server and, when said requested contents data does not exist in said home server, acquires said requested contents data from said online storage center, and stores said requested contents data in said home server.

14. The storage system according to any one of claims 10 to 13,
wherein a wireless base station for conducting wireless communication with a mobile device is connected to said home server or said online storage center via said network; and
wherein, when said mobile device issues a storage request of said contents data, said home server compares the actual unused capacity and said capacity limit in said home server and, when the actual unused capacity in said home server is less than said capacity limit, sends said contents data and the management information of said contents data stored in said home server to said online storage center, and deletes said contents data from said home server among said contents data and the management information of said contents data sent from said online storage center.

15. The storage system according to claim 14,
wherein, when said mobile device issues an acquisition request of said contents data, said home server searches for said requested contents data in said home server and, when said requested contents data does not exist in said home server, issues a redirect command for causing said mobile device to change the destination to said online storage center and reissue an acquisition request of said contents data.

16. The storage system according to claim 14 or claim 15,
wherein said home server deletes said contents data after sending said contents data and the management data of said contents data stored in said home server to said online storage center.

17. The storage system according to claim 16,
wherein, after deleting contents data with the oldest access date among the contents data stored in both said home server and said online storage center, said home server compares the actual unused capacity and said capacity limit in said home server after said deletion of contents data.

18. The storage system according to claim 10,
wherein said one or more household appliances are pre-set with a household appliance unused capacity limit, and
wherein said home server compares the actual unused capacity in said one or more household appliances and said household appliance capacity limit and, when the actual unused capacity in said one or more household appliances is less than said household appliance capacity limit, deletes contents data stored in said home server among a plurality of contents data stored in said one or more household appliances.

19. A data transfer method of a storage system comprising one or more household appliances; a home server connected to said one or more household appliances via a home network, storing contents data and management information of said contents data received from said one or more household appliances, and pre-set with an unused capacity limit; and an online storage center connected to said home server via a network; comprising:
a step for sending said contents data and management data of said contents data stored in said home server from said home server to said online storage center when the actual unused capacity in said home server falls below said capacity limit; and
a step for deleting said contents data from said home server while leaving the management information of said contents data stored among said contents data and the management information of said contents data sent from said online storage center.

20. The data transfer method according to claim 19, further comprising a step for comparing the actual unused capacity and said capacity limit in said home server when said household appliance issues a storage request of said contents data.
